**Europäisches Patentamt**

**European Patent Office**

**Office européen des brevets**

(19)

(11) **EP 1 482 710 A1**

(12) **EUROPEAN PATENT APPLICATION**
published in accordance with Art. 158(3) EPC

(43) Date of publication:
**01.12.2004 Bulletin 2004/49**

(51) Int Cl.⁷: $H04L\ 29/08$

(21) Application number: **03707088.5**

(86) International application number:
**PCT/JP2003/002117**

(22) Date of filing: **26.02.2003**

(87) International publication number:
**WO 2003/085934 (16.10.2003 Gazette 2003/42)**

(84) Designated Contracting States:
**AT BE BG CH CY CZ DE DK EE ES FI FR GB GR HU IE IT LI LU MC NL PT SE SI SK TR**

(30) Priority: **08.04.2002 JP 2002104999**

(71) Applicant: **MITSUBISHI DENKI KABUSHIKI KAISHA Tokyo 100-8310 (JP)**

(72) Inventor: **FUJIE, Ryoichi Mitsubishi Denki Kabushiki Kaisha Chiyoda-ku, Tokyo 100-8310 (JP)**

(74) Representative: **Pfenning, Meinig & Partner Mozartstrasse 17 80336 München (DE)**

(54) **DATA TRANSMISSION APPARATUS AND DATA TRANSMISSION METHOD**

(57)  A transmission block receiving unit 101 receives a transmission block, a request issuing time assigning unit 102 assigns an arrival time of the transmission block as a request issuing time to the transmission block, a transmission block separating unit 104 makes one of plural transmission block storing units 105 store the transmission block, a scheduling unit 106 obtains a transmission completion time limit for each transmission block from the request issuing time and an authorized delay time of the oldest transmission block in each of the plural transmission block storing units 105, radio resource is allotted to the transmission block of which a difference between the transmission completion time limit and the current time is the smallest as a transmission object, and transmission is carries out by a transmission block multiplexing unit 107 and a radio transmission unit 109.

Fig. 1

## Description

Technical Field

The present invention relates to scheduling for data transmission, for example, scheduling for transmission of stream-type data which is sensitive to delay.

Background Art

In a mobile communication system, plural users in the same area need to be provided with services. Accordingly, it is necessary to assign different radio resource (frequency, time, or diffusion code) to each user to avoid interference. Further, in a mobile communication system which handles variable-rate traffic, in order to effectively use the radio resource, scheduling is carried out so as to dynamically assign the radio resource to users who need to use.

In general, the scheduling is carried out with a radio frame cycle. Two typical algorithms for scheduling will be explained.

By a round-robin type, all users are provided with a chance to be assigned the radio resource in rotation, and if requested, the radio resource is assigned. This method is easy to implement.

By a line quality reflective type, users who have good quality of radio line are provided with a chance to be assigned preferentially, and if requested, the resource is assigned. Since a chance to be assigned is given preferentially to the users having good quality of radio line, it is possible to implement a highly effective use of the radio resource in the system as a whole.

In the future, it is expected that transmission of stream-type data such as real-time animation or speech would be increased. This stream-type data is sensitive to delay, so that it becomes impossible to normally reproduce data at a receiver side if excessive delay than an authorized value is applied to a packet caused by transmission queuing due to the scheduling.

Therefore, the Japanese unexamined patent publication JP8-288952 proposes to output preferentially a packet categorized in a quality class having a short authorized delay time. This prior art is not directed to the mobile communication system; however, the purpose is the same, and thus the art is described here as a related art.

Fig. 20 explains a configuration of a transmission apparatus of the first related art (JP 8-288952).

In the figure, 2004 is a packet separating unit, 2005 is a packet storing unit, 2006 is a scheduling unit, and 2007 is a packet multiplexing unit.

In the following, an operation will be explained.

The packet separating unit 2004 checks a quality class of a packet inputted, and separates the packet to the packet storing unit corresponding to the quality class. As the quality class, an authorized delay time is mainly assumed.

The packet storing unit 2005 stores the packet for each quality class.

The scheduling unit 2006 carries out scheduling so as to extract the packet preferentially from the packet storing unit of the quality class of a short authorized delay time.

The packet multiplexing unit 2007 extracts the packet from the packet storing unit 2005 by an instruction of the scheduling unit 2006, multiplexes and outputs the packet.

On the other hand, since the mobile communication employs the radio, the line quality becomes unstable, and thus the receiver side sometimes cannot receive the packet correctly. To solve the problem, for the packet which has not been received correctly, a retransmission control function is often used in which a retransmission request is sent to a transmitter side, and the transmitter side retransmits the corresponding packet.

However, it essentially takes time to successfully receive a packet by the receiver side with multiple times of retransmission. When the time required for this retransmission exceeds the authorized delay time, the packet cannot be used even if the receiver side correctly receives it. As a result, the radio resource becomes waste.

Consequently, the Japanese unexamined patent publication JP 10-56480 offers to terminate the retransmission if the time required for the retransmission exceeds the authorized delay time.

Fig. 21 explains a configuration of a transmission apparatus of the second related art (JP 10-56480).

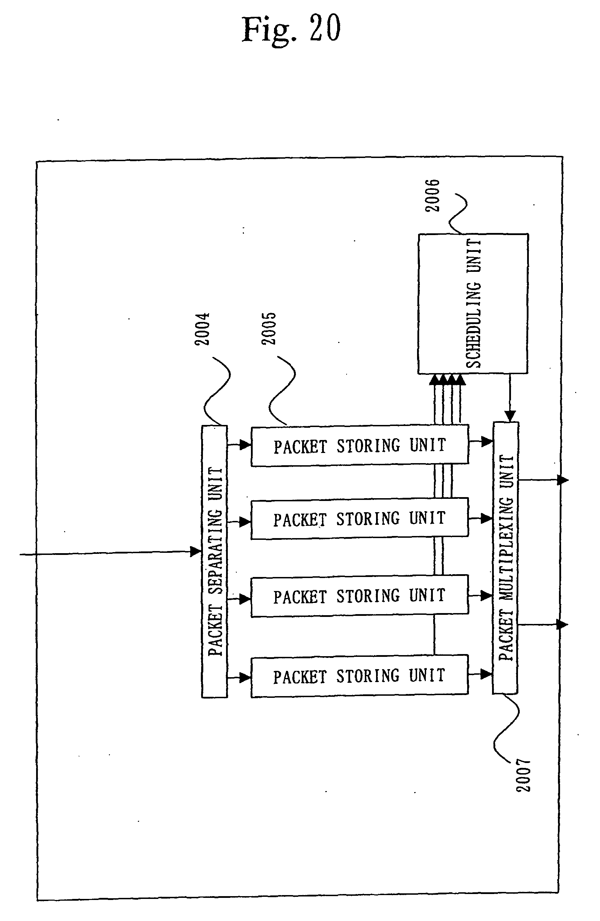

In the figure, 2108 is a retransmission controlling unit, and 2110 is an authorized delay time excess observing unit. Here, numerals 2104 through 2107 show the same as those in Fig. 20.

Next, an operation will be explained.

On receiving a retransmission request issued by a reception apparatus, the retransmission controlling unit 2108 generates a retransmission packet corresponding to the request and transfers it to the packet storing unit.

The authorized delay time excess observing unit 2110 observes each packet stored in the packet storing unit, searches a packet which has been stored for longer than the authorized delay time, and if such packet exists, instructs the packet storing unit to discard the corresponding packet.

The operation of the other components is the same as the case of Fig. 20.

By doing so, it is possible to avoid transmission of useless packet, so that it is also possible to avoid wasting the radio resource.

However, there are problems in these related arts as described in the following.

The primary problem is there is no equality in discarding the packet.

In the first related art, the class with a short "authorized delay time" is always treated preferentially over the class with a long "authorized delay time." Accordingly, in case of convergence, the packet is discarded from the class with the long "authorized delay time." However, an application with the long "authorized delay time" is not always robust to the packet discarding, and thus the method proposed by the first related art lacks the equality.

Among plural classes of different "authorized delay times" requests, the equality must be established in any aspects other than that of "authorized delay time," and therefore a probability of discarding the packet has to be equal. Or the probability of discarding the packet has to be defined based on another priority.

The secondary problem is that generation of the retransmission is likely to prevent completion of the transmission within the authorized delay time.

In the second related art, the effective use of the radio resource is attempted by discarding a packet which exceeds the "authorized delay time" at the transmitter side without retransmission; however, the art does not provide a process to passively complete the transmission before exceeding the "authorized delay time." Accordingly, it is still impossible to solve the problem that the reception apparatus cannot receive the packet within the "authorized delay time."

In this way, the related arts have a problem in handling the stream-type traffic for which the transmission has to be completed within the "authorized delay time."

The present invention, therefore, aims to solve the problems of the related arts as discussed above.

Disclosure of the Invention

According to the present invention, a data transmission apparatus for carrying out data transmission and includes:

a plurality of data storing units respectively being capable to store at least one piece of transmission queuing data which is awaiting transmission;
a data specifying unit for selecting specific transmission queuing data as transmission candidate data out of the transmission queuing data stored in each data storing unit, specifying a transmission completion time for each transmission candidate data, obtaining a difference between the transmission completion time and a current time, and specifying specific transmission candidate data as a transmission object based on the difference between the transmission completion time and the current time for each transmission candidate data; and
a data transmitting unit for transmitting the transmission candidate data specified as the transmission object by the data specifying unit.

The data specifying unit specifies the transmission candidate data of which the difference between the transmission completion time and the current time is smallest as the transmission object.

The data transmission apparatus carries out data transmission of data received from another apparatus, and

the data specifying unit obtains an arrival time and an authorized delay time for each transmission candidate data, adds the arrival time and the authorized delay time obtained, and sets a value obtained by the adding as the transmission completion time of each transmission candidate data.

The data transmission apparatus further includes a retransmission controlling unit for receiving a retransmission request for the data transmitted by the data transmitting unit and instructing the data storing unit which has stored retransmission requested data of which retransmission is requested to generate the retransmission requested data,

each data storing unit generates the retransmission requested data instructed when generation of the retransmission requested data is instructed by the retransmission controlling unit and stores the retransmission requested data generated, and

the data specifying unit checks existence of the retransmission requested data stored for each data storing unit, for the data storing unit without storing the retransmission requested data, selects specific transmission queuing data as transmission candidate data from the transmission queuing data stored, and for the data storing unit storing at least one piece of the retransmission requested data, selects specific retransmission requested data as the transmission candidate data from the retransmission requested data stored.

The data transmission apparatus further includes a transmission completion time storing unit, when the transmission completion time for the transmission candidate data which is the transmission queuing data is specified by the data specifying unit, for storing the transmission completion time specified by relating with the corresponding transmission candidate data, and

the data specifying unit, when one of the retransmission requested data is selected as the transmission candidate data, obtains the transmission completion time related with the transmission candidate data selected from the transmission completion time storing unit, and sets the transmission completion time obtained as the transmission completion time of the transmission candidate data selected.

The data transmission apparatus carries out data transmission of data received from another apparatus, and

the data specifying unit obtains an arrival time and an authorized delay time for each transmission candidate data, multiplies a coefficient defined for each transmission candidate data with the authorized delay time, adds the arrival time to a value obtained by the multiplying, and sets a value obtained by the adding as the transmission completion time of each transmission candidate data.

The data transmission apparatus carries out data transmission received from another apparatus,

the data transmission apparatus further includes a transmission completion time storing unit, when a first transmission completion time for the transmission candidate data which is the transmission queuing data is specified by the data specifying unit, for storing the first transmission completion time specified by relating with the corresponding transmission candidate data, and

the data specifying unit:

checks the existence of the retransmission requested data stored for each data storing unit, for the data storing unit without storing the retransmission requested data, selects specific transmission queuing data as the transmission candidate data from the transmission queuing data stored, and for the data storing unit storing at least one piece of the retransmission requested data, selects specific retransmission requested data as the transmission candidate data from the retransmission requested data stored;

for the transmission candidate data which is the transmission queuing data, obtains an arrival time and an authorized delay time for each transmission candidate data, adds the arrival time and the authorized delay time obtained, and sets a value obtained by the adding as the first transmission completion time of each transmission candidate data, multiplies a coefficient defined for each transmission candidate data with the authorized delay time, adds the arrival time to a value obtained by the multiplying, and sets a value obtained by the adding as a second transmission completion time of each transmission candidate data;

for the transmission candidate data which is the retransmission requested data, obtains an arrival time of the retransmission request for each transmission candidate data, obtains the first transmission completion time related to each transmission candidate data from the transmission completion time storing unit, subtracts the arrival time of the retransmission request from the first transmission completion time obtained, multiplies a coefficient defined for each transmission candidate data with a value obtained by the subtracting, adds the arrival time to a value obtained by the multiplying, and specifies a value obtained by the adding as the second transmission completion time; and

obtains a difference between the second transmission completion time and the current time for each transmission candidate data, and specifies specific transmission candidate data as the transmission object based on the difference between the second transmission completion and the current time for each transmission candidate data.

The data transmission apparatus further includes a coefficient value determining unit for determining a value of the coefficient based on quality of a communication line used for transmitting the transmission candidate data, for each transmission candidate data.

The data transmission apparatus further includes a coefficient value determining unit for determining a value of the coefficient based on moving speed of a mobile communication apparatus which is a destination of the transmission candidate data, for each transmission candidate data.

The data transmission apparatus further includes a coefficient value determining unit for determining a value of the coefficient based on geographical condition of a location of a mobile communication apparatus which is a destination of the transmission candidate data, for each transmission candidate data.

The data transmission apparatus carries out data transmission of data received from another apparatus,

the data transmission apparatus further includes a transmission completion time storing unit, when a transmission completion time for each transmission trial is specified for the transmission candidate data which is the transmission queuing data by the data specifying unit, for storing the transmission completion time for each transmission trial specified by relating with the corresponding transmission candidate data, and

the data specifying unit:

checks the existence of the retransmission requested data stored for each data storing unit, for the data storing unit without storing the retransmission requested data, selects specific transmission queuing data as the transmission candidate data from the transmission queuing data stored, and for the data storing unit storing at least one piece of the retransmission requested data, selects specific retransmission requested data as the transmission candidate data from the retransmission requested data stored;

for the transmission candidate data which is the transmission queuing data, specifies the transmission completion time for each transmission trial based on a number of transmission trials defined for each transmission candidate data, and obtains a difference between the transmission completion time for a first transmission trial out of the transmission completion time specified and the current time;

for the transmission candidate data which is the retransmission requested data, checks a next number of transmission trials conducted, obtains a transmission completion time for the next number of transmission trials conducted from the transmission completion time storing unit, and obtains a difference between the transmission completion time obtained and the current time; and

specifies specific transmission candidate data as the transmission object based on the difference between the transmission completion time for each transmission candidate data and the current time.

The specifying unit specifies the transmission completion time for each transmission trial by equally setting intervals of the transmission completion times.

The data specifying unit specifies the transmission completion time for each transmission trial by setting intervals of transmission completion times so that later transmission trials have shorter intervals.

The data transmission apparatus carries out data transmission of data received from another apparatus, and

the data specifying unit obtains an arrival time and an authorized delay time for each transmission candidate data, checks a number of transmission trial conducted for each transmission candidate data, and specifies the transmission completion time for each transmission candidate data based on the arrival time, the authorized delay time, and the number of transmission trials conducted.

According to the present invention, a data transmission method for carrying out data transmission includes:

a data specifying step for selecting at least two pieces of transmission queuing data from a plurality pieces of transmission queuing data which are awaiting transmission, specifying transmission completion time for each transmission candidate data, obtaining a difference between the transmission completion time and a current time, and specifying specific transmission candidate data as a transmission object based on the difference between the transmission completion time for each transmission candidate data and the current time; and

a data transmitting step for transmitting the transmission candidate data specified as the transmission object by the data specifying step.

The data specifying step specifies the transmission candidate data of which the difference between the transmission completion time and the current time is smallest as the transmission object.

The data transmission method carries out data transmission of data received from another communication method, and

the data specifying step obtains an arrival time and an authorized delay time for each transmission candidate data, adds the arrival time and the authorized delay time obtained, and sets a value obtained by the adding as the transmission completion time of each transmission candidate data.

The data specifying unit specifies the transmission completion time for each transmission candidate data, obtains the difference between the transmission completion time and the current time, specifies the transmission candidate data of which the difference between the transmission completion time and the current time is smaller than a predetermined threshold value as the transmission object, and determines if the transmission candidate data of which the difference between the transmission completion time and the current time is larger than the predetermined threshold value is to be specified as the transmission object or not based on a different criteria other than the difference between the transmission completion time and the current time.

The data transmission apparatus carries out data transmission to a plurality of mobile communication apparatuses;

the data transmission apparatus further includes a data receipt status information receiving unit for receiving information related to data receipt status of each mobile communication apparatus from each mobile communication apparatus; and

the data specifying unit, when the transmission candidate data exists of which the difference between the transmission completion time and the current time is larger than the predetermined threshold value, analyses the data receipt status of each mobile communication apparatus based on the information related to the data receipt status received from each mobile communication apparatus, and determines if the transmission candidate data of which the difference between the transmission completion time and the current time is larger than the predetermined threshold value is to be specified as the transmission object or not based on an analysis result.

Each of the plurality of data storing units is related to any one of the plurality of mobile communication apparatuses and

the data specifying unit, when the transmission candidate data exists of which the difference between the transmission completion time and the current time is larger than the predetermined threshold value, analyses for each data storing unit the data receipt status of each mobile communication apparatus corresponding to each data storing unit, and preferentially specifies the transmission queuing data stored in the data storing unit to which the data receipt status of the mobile communication apparatus corresponding is good as the transmission object.

Brief Explanation of the Drawings

Fig. 1 shows a configuration of a transmission apparatus of a radio communication system according to the first embodiment.
Fig. 2 is a flowchart showing the operation of a scheduling unit of the first embodiment.

Fig. 3 shows an outline of the operation of the first embodiment.

Fig. 4 is a configuration of a transmission apparatus of a radio communication system according to the second embodiment.

Fig. 5 is a flowchart showing the operation of a scheduling unit of the second embodiment.

Fig. 6 shows a transmission completion time limit storing table used in the second embodiment.

Fig. 7 shows an outline of the operation of the second embodiment.

Fig. 8 is a flowchart showing the operation of a scheduling unit of the third embodiment.

Fig. 9 is the first explanatory drawing showing an outline of the operation according to the third embodiment.

Fig. 10 is the second explanatory drawing showing an outline of the operation according to the third embodiment.

Fig. 11 is the third explanatory drawing showing an outline of the operation according to the third embodiment.

Fig. 12 shows a flowchart for determining a coefficient K in the third embodiment.

Fig. 13 is a flowchart showing the operation of a scheduling unit of the fourth embodiment.

Fig. 14 shows a transmission completion time limit storing table used in the fourth embodiment.

Fig. 15 is the first explanatory diagram showing an outline of the operation of the fourth embodiment.

Fig. 16 is the second explanatory diagram showing an outline of the operation of the fourth embodiment.

Fig. 17 is a flowchart showing the operation of a scheduling unit of the fifth embodiment.

Fig. 18 is a graph showing an expression used in the fifth embodiment.

Fig. 19 is an explanatory drawing showing an outline of the operation of the fifth embodiment.

Fig. 20 shows a configuration of a transmission apparatus in a radio communication system according to the first related art.

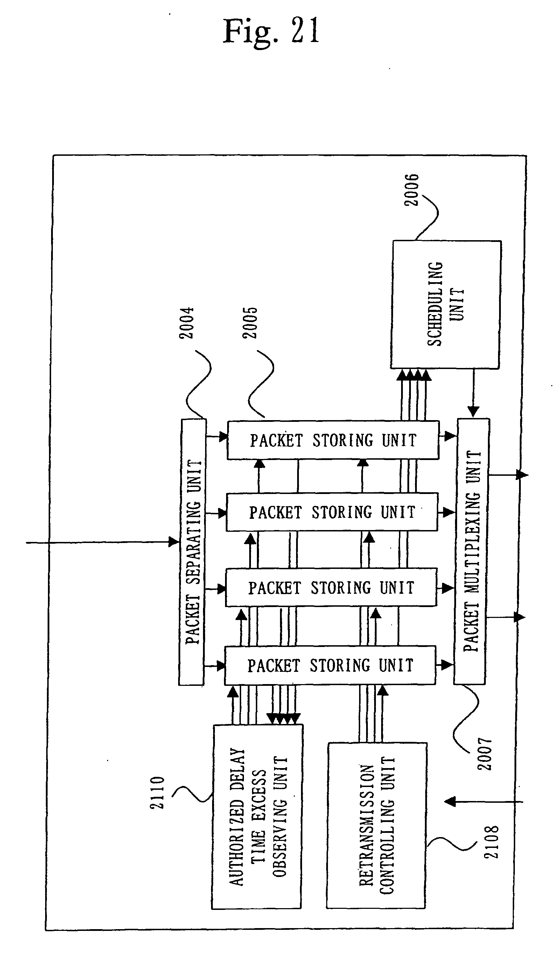

Fig. 21 shows a configuration of a transmission apparatus in a radio communication system according to the second related art.

Fig. 22 shows a configuration of a transmission apparatus in a radio communication system according to the sixth embodiment.

Fig. 23 is a flowchart showing the operation of a scheduling unit of the sixth embodiment.

Fig. 24 is a flowchart showing the operation of a scheduling unit of the sixth embodiment.

Fig. 25 is an explanatory drawing showing an outline of the operation of the sixth embodiment.

Preferred Embodiments for Carrying out the Invention

Embodiment 1.

One embodiment of a communication system according to the present invention will be explained.

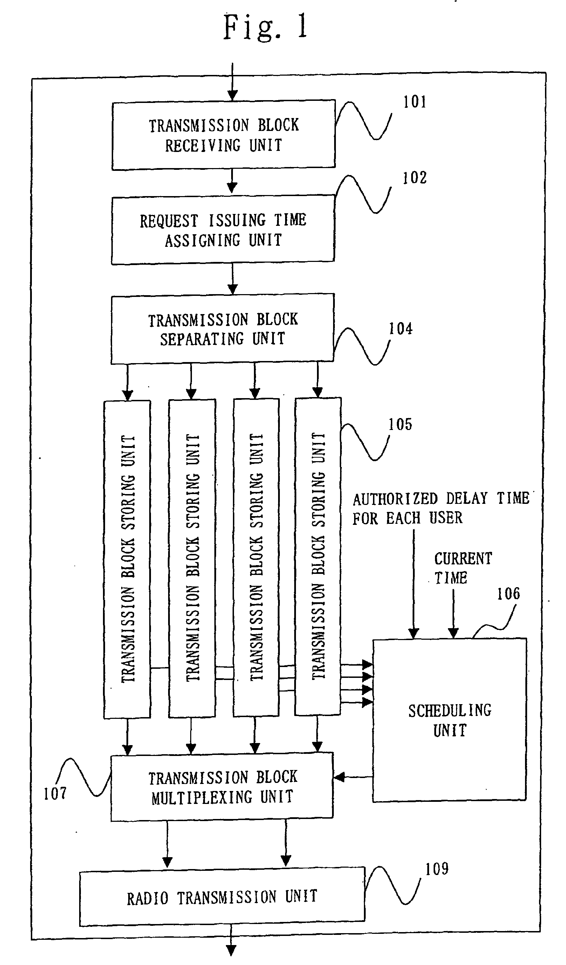

Fig. 1 shows a configuration of a transmission apparatus constituting a radio communication system according to the first embodiment of the present invention.

In Fig. 1, a reference numeral 101 shows a transmission block receiving unit, 102 shows a request issuing time assigning unit, 104 shows a transmission block separating unit, 105 shows a transmission block storing unit, 106 is a scheduling unit, 107 is a transmission block multiplexing unit, and 109 is a radio transmission unit.

Next, the operation of each unit will be discussed.

The transmission block receiving unit 101 accepts (receives) a transmission block from the outside (another apparatus).

The request issuing time assigning unit 102 assigns a time when the transmission block reaches the transmission apparatus (reception time) to each of the transmission blocks received as a request issuing time.

The transmission block separating unit 104 separates the transmission blocks into respective reception apparatuses or respective connections.

The transmission block storing unit 105 stores the transmission blocks. In each transmission block storing unit, the transmission blocks are stored in an order of receipt for each reception apparatus or each connection. Here, the transmission block storing unit 105 is an example of a data storing unit. Further, the transmission block stored in the transmission block storing unit 105 corresponds to transmission queuing data.

The scheduling unit 106 specifies a transmission block as a transmission object and radio resource (a frequency, a time, a diffused code, etc.) to be assigned to the transmission block based on information from the transmission block storing unit 105, authorized delay time information given to each user, and the current time information. The scheduling unit 106 is an example of a data specifying unit.

The transmission block multiplexing unit 107 extracts the transmission block, which is the transmission object specified by the scheduling unit 106, from the transmission block storing unit 105 and carries out a multiplexing.

The radio transmission unit 109 outputs the transmission block via an antenna after performing processes such as modulation, amplification, etc. Here, a combination of the transmission block multiplexing unit 107 and the radio transmission unit 109 corresponds to an example of a data transmitting unit.

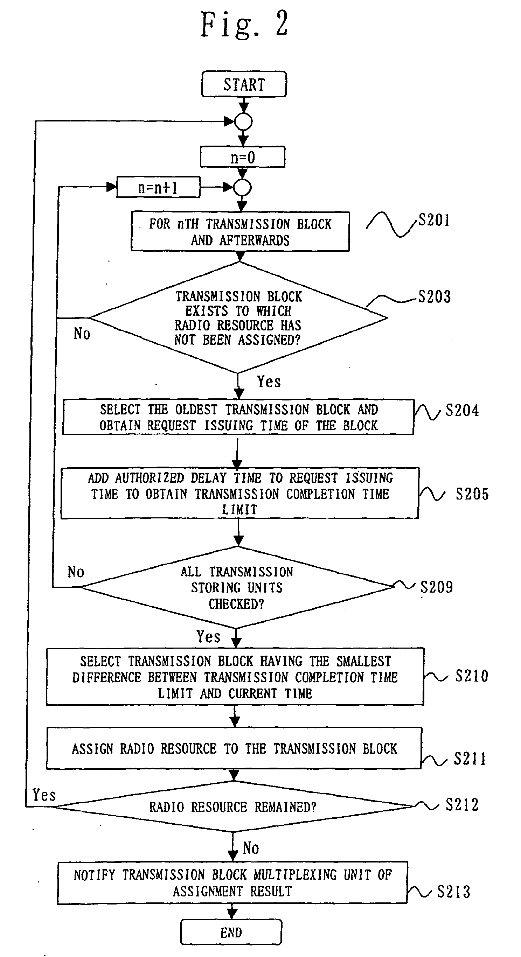

Fig. 2 is a flowchart explaining the operation of a scheduling unit according to the first embodiment of the invention. In this flowchart, it is assumed that the operation is initiated by a cycle such as a radio frame cycle, etc.

Next, the operation of the scheduling unit in this embodiment will be explained by referring to the flowchart of Fig. 2.

For each transmission block storing unit, the request issuing time of the oldest transmission block is obtained out of the transmission blocks to which the radio resource have not been assigned yet and which are waiting for transmission, based on the information attached to the transmission blocks (S204). Here, the oldest transmission block within each transmission block storing unit corresponds to transmission candidate data.

The scheduling unit adds an authorized delay time to the request issuing time of each oldest transmission block in each transmission block storing unit to obtain a transmission completion time limit (transmission completion time) (S205). This transmission completion time limit shows a targeted time limit when the transmission block completes the transmission.

After checking all the transmission block storing units, the transmission block having the transmission completion time limit of which the time difference from the current time is the smallest is specified as a transmission object (S210). That the difference is the smallest means the transmission completion time limit is imminent, and such transmission block needs to have a priority to be transmitted.

The radio resource is assigned to the selected transmission block (S211).

It is checked if the radio resource remains or not (S212).

If no radio resource remains, an assignment result is notified to a transmission block multiplexing unit (S213), and the scheduling process is finished.

If the radio resource remains, the scheduling process is repeated again.

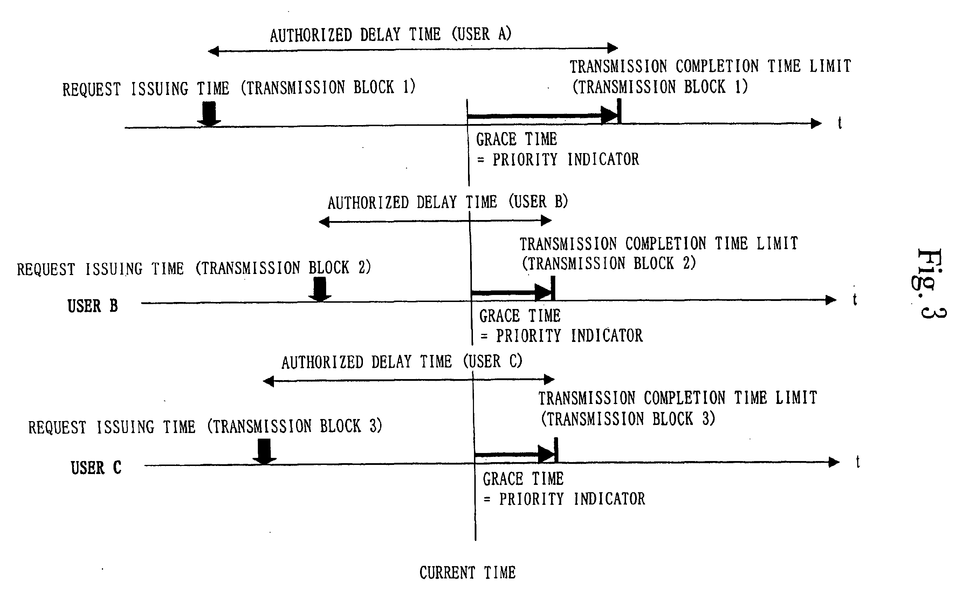

Fig. 3 explains an outline of the operation of the scheduling unit according to the first embodiment.

Fig. 3 shows the case in which transmission blocks arrive for a user A, a user B, and a user C, respectively, and they are scheduled.

It is assumed that the "authorized delay time (user A)" of the user A is larger than the "authorized delay time (user B)" of the user B.

Two transmission blocks, namely, a transmission block 1 and a transmission block 2 have arrived for the user A and the user B, respectively.

It is assumed that the "request issuing time (transmission block 1)" of the transmission block 1 is earlier than the "request issuing time (transmission block 2)" of the transmission block 2.

As described above, the authorized delay time (user A) is added to the request issuing time (transmission block 1) for the transmission block 1, the authorized delay time (user B) is added to the request issuing time (transmission block 2) for the transmission block 2, and the transmission completion time limit of each transmission block is obtained as shown in Fig. 3.

The difference between the current time and the transmission completion time limit shows a grace time until the transmission completion time limit, and the radio resource is assigned to each of the transmission blocks preferentially from the one having the smallest grace time.

Here, since the grace time of the transmission block 2 is shorter, the transmission block 2 is scheduled to be transmitted prior to the transmission block 1.

On the other hand, although the request issuing time of the transmission block 2 and that of the transmission block 3 directed to the user C are different, their grace times are the same, and thus they are equally scheduled.

As discussed above, since the present embodiment sets the priority according to the "grace time" which is a difference between the transmission completion time limit and the current time and scheduling is carried out, it can be avoided that unnecessary radio resource is assigned to the transmission block of which the "grace time" is still long enough. And thus an unassigned part of radio resource generated by this avoidance can be assigned preferentially to the transmission block of which the "grace time" is short.

This enables to treat equally stream-type data which is sensitive to delay.

In the present embodiment, the arrival time of each transmission block at this apparatus is referred to as the "request issuing time," however; when a packet is separated into transmission blocks in an apparatus which is located in the upstream of the dataflow, the "request issuing time" of each transmission block can be a time when the packet arrives at the apparatus located in the upstream.

In addition, the flowchart for explaining the operation of the scheduling unit merely explains the simplest example of operation, and another implementing unit enables the operation with a higher speed. For instance, it is considered to have a means that aligns previously all of the transmission blocks sequentially according to an order of the transmission completion time limit within the transmission block storing unit.

Embodiment 2.

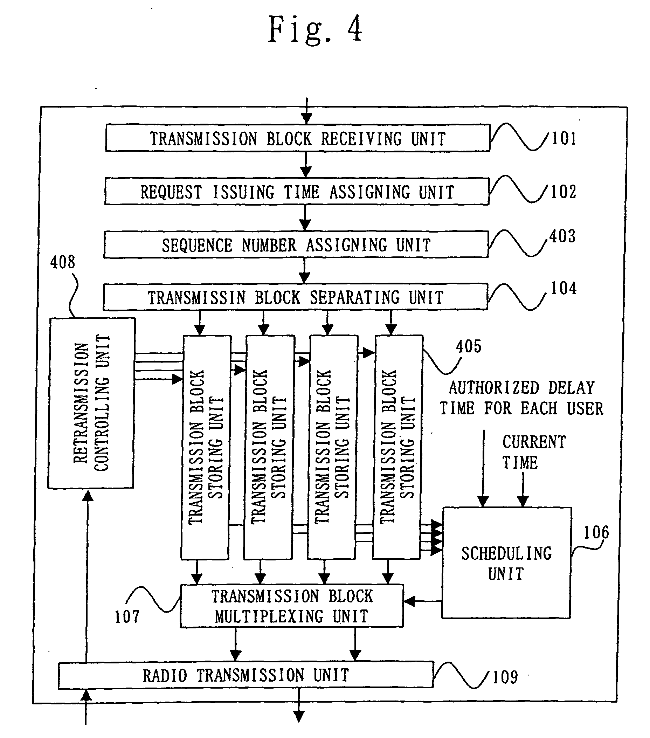

Fig. 4 is a configuration of a transmission apparatus which constitutes a radio communication system according to the second embodiment.

In Fig. 4, a reference numeral 403 shows a sequence number assigning unit. 405 shows a transmission block storing unit. 408 shows a retransmission controlling unit.

The other elements are the same as those shown in Fig.1 of the first embodiment.

In the following, the operation of the sequence number assigning unit 403, the transmission block storing unit 405, and the retransmission controlling unit 408 will be explained.

The sequence number assigning unit 403 assigns a sequence number to each of the transmission blocks.

When retransmission request information including the sequence number is received, the retransmission controlling unit 408 instructs the transmission block storing unit which has stored the transmission block of the retransmission object to generate a retransmission block (retransmission requested data) of the corresponding transmission block.

When the above instruction is received, the transmission block storing unit 405 generates the retransmission block.

The other operations are the same as those of the first embodiment.

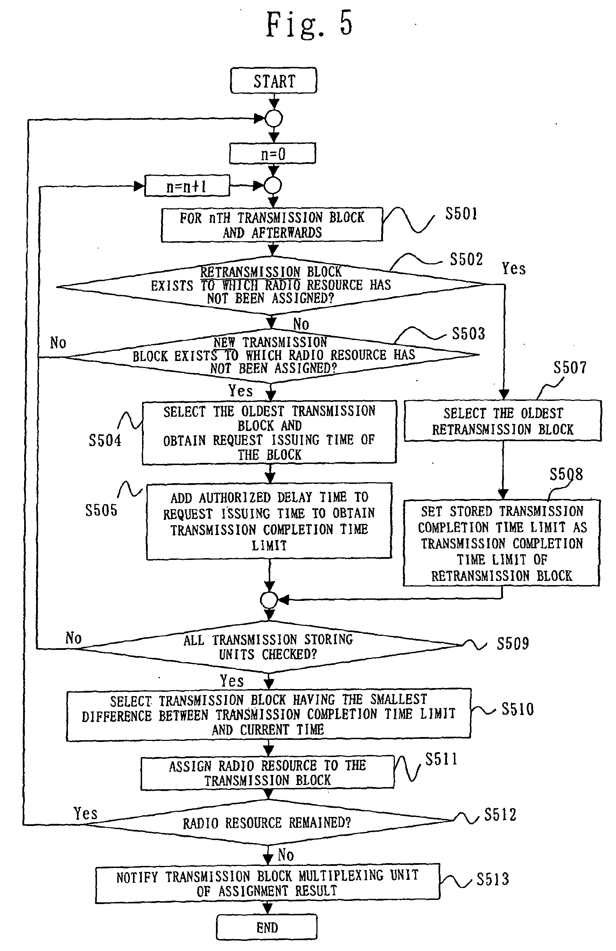

Fig. 5 is a flowchart explaining the operation of the scheduling unit according to the second embodiment of this invention.

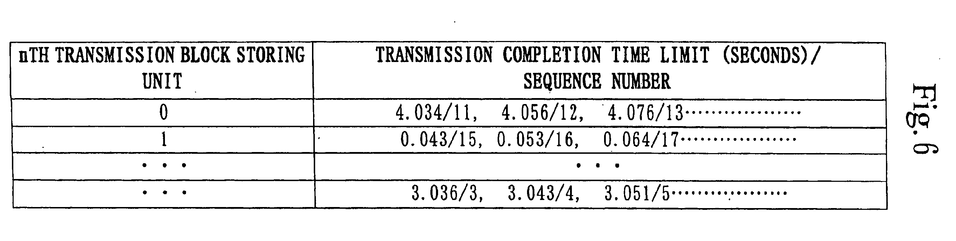

Fig. 6 shows a transmission completion time limit storing table used by the scheduling unit in the second embodiment of this invention.

This transmission completion time limit storing table can be administrated by the scheduling unit 106, or can be administrated by some means other than the scheduling unit 106. Here, the means to administrate this transmission completion time limit storing table corresponds to a transmission completion time storing unit.

Next, the operation of the scheduling unit of the present embodiment will be explained by referring to the flowchart of Fig. 5.

For each of the transmission block storing units, it is checked if the retransmission block exists or not (S502).

When there is no retransmission block, then it is checked if a new transmission block exists or not (S503).

When the new transmission block neither exists, such transmission block storing unit is skipped.

When the new transmission blocks exist, the oldest transmission block is selected from the new transmission blocks to which the radio resource has not been assigned, and its request issuing time is obtained from the information attached to the oldest transmission block (S504).

The authorized delay time is added to the request issuing time, the transmission completion time limit is obtained, and it is memorized with the sequence number (S505). This transmission completion time limit shows a targeted time limit when the transmission block finishes the transmission. The memorizing is conducted at the transmission completion time limit storing table shown in Fig. 6.

On the other hand, when the retransmission block exists, the oldest retransmission block is selected from the transmission blocks to which the radio resource has not been assigned yet (S507).

From the sequence number of the selected retransmission block, the transmission completion time limit stored in the transmission completion time limit storing table is obtained, which is set as the transmission completion time limit of the retransmission block (S508).

The operations thereafter are the same as those of the first embodiment.

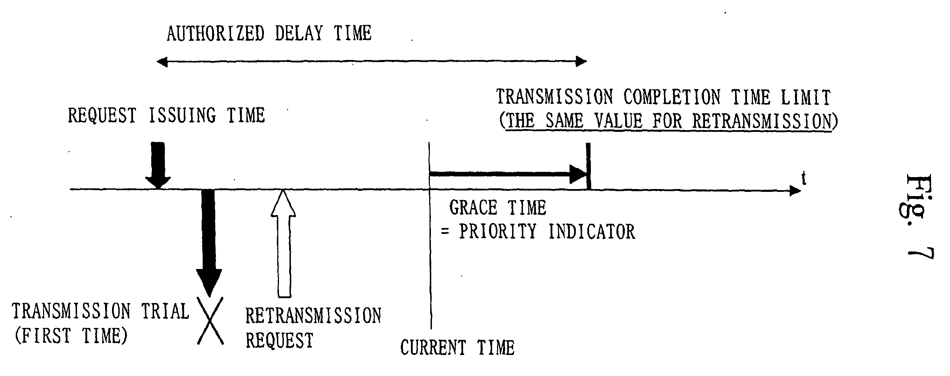

Fig. 7 is an explanatory drawing for explaining the operation of the scheduling unit according to the second embodiment.

Fig. 7 shows a case that the transmission block arrives for a certain user, the transmission block is scheduled and transmitted, but the retransmission is done because an error occurs.

The error occurs in a transmission trial (the first time), and a retransmission request is received from the reception apparatus. The transmission apparatus generates a corresponding retransmission block; it is assumed that the transmission completion time limit of the retransmission block is the same as the transmission completion time limit stored in the transmission completion time limit storing table. A difference between the current time and the transmission completion time limit is set as the "grace time," and the radio resource is assigned preferentially to the transmission block of which the grace time is short.

As has been explained, even when the embodiment is combined with the retransmission controlling unit, the scheduling is carried out by setting a priority based on the "grace time" which is the difference between the transmission completion time limit and the current time. Accordingly, it can be avoided that unnecessary radio resource is assigned to the transmission block of which the "grace time" is still long enough. And thus the unassigned part of radio resource generated by this avoidance can be assigned preferentially to the transmission block of which the "grace time" is short.

This enables to treat equally stream-type data which is sensitive to delay.

Embodiment 3.

A configuration of a transmission apparatus according to the present embodiment is the same as that of Fig. 4 in the second embodiment.

In the following, the operation will be explained.

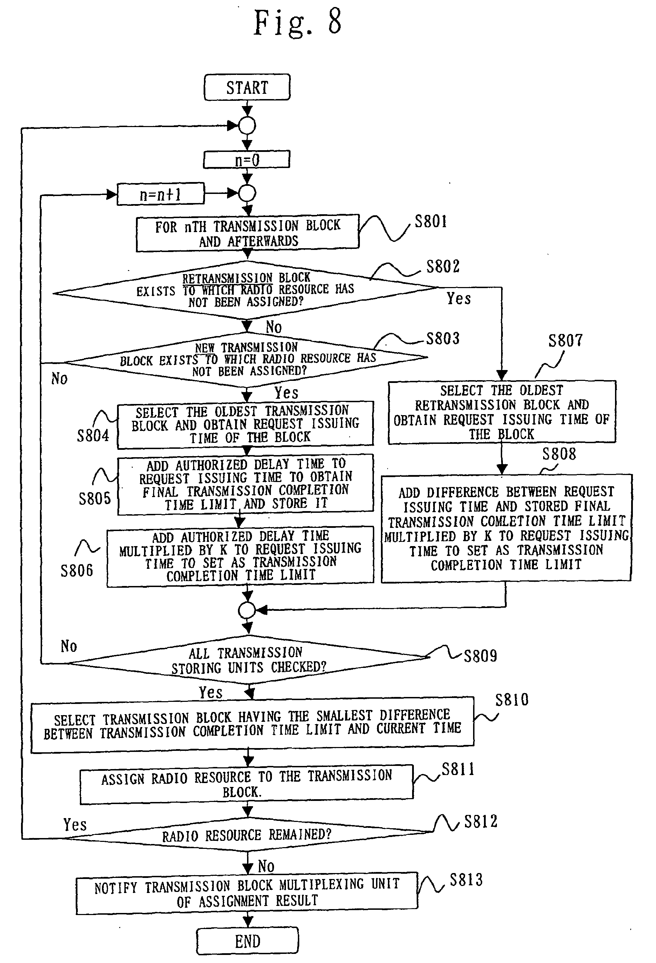

Fig. 8 is a flowchart explaining the operation of a scheduling unit according to the third embodiment of this invention.

In Fig. 8, first, it is checked if a retransmission block exists or not for each transmission block storing unit (S802).

When the retransmission block does not exist, next it is checked if a new transmission block exists or not (S803).

When the new transmission block neither exists, such transmission block storing unit is skipped.

When the new transmission blocks exist, the oldest transmission block is selected from the new transmission blocks to which the radio resource has not been assigned, and its request issuing time is obtained from the information attached to that transmission block (S804).

The authorized delay time is added to the request issuing time, and a final transmission completion time limit is obtained and stored with the sequence number (S805). This final transmission completion time limit shows a targeted deadline until which the transmission of the transmission block is finished. Here, this final transmission completion time limit corresponds to a first transmission completion time. The memorizing is done at the transmission completion time limit storing table shown in Fig. 6.

A product of multiplication of the authorized delay time with a coefficient K $(0<K<1)$ is added to the request issuing time, and the total value is set as the transmission completion time limit (S806). Here, this transmission completion time limit corresponds to a second transmission completion time.

On the other hand, when the retransmission block exists, the oldest retransmission block is selected from the transmission blocks to which the radio resource has not been assigned yet (S807).

From the sequence number of the selected retransmission block, the final transmission completion time limit stored in the transmission completion time limit storing table is obtained. A product of multiplication of a difference between the request issuing time (retransmission request arrival time) and the obtained final transmission completion time limit with the coefficient K $(0<K<1)$ is added to the request issuing time (retransmission request arrival time) and the total value is set as the transmission completion time limit (S808).

The operations thereafter are the same as those of the first embodiment.

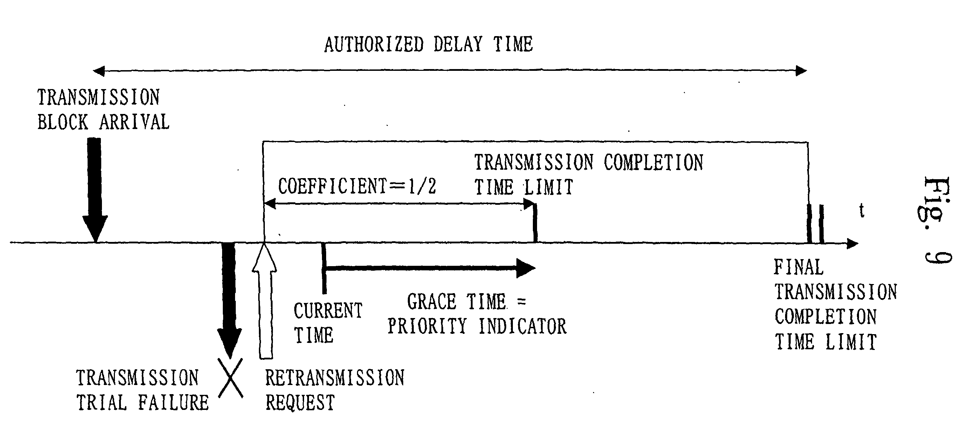

Fig. 9 shows relationship among each period and time.

A priority indicator for scheduling can be obtained as follows:

Final transmission completion time limit = Transmission block arrival time + Authorized delay time
Request issuing time = New transmission block arrival time or Retransmission request arrival time
Transmission completion time limit = (Final transmission completion time limit - Request issuing time) x Coefficient + Request issuing time
Grace time = Transmission completion time limit - Current time
Priority indicator = Grace time

In order to transmit correctly one transmission block to the receiver side, one or multiple times of trials are necessary. The number of transmission trials depends on quality of the radio line, etc.

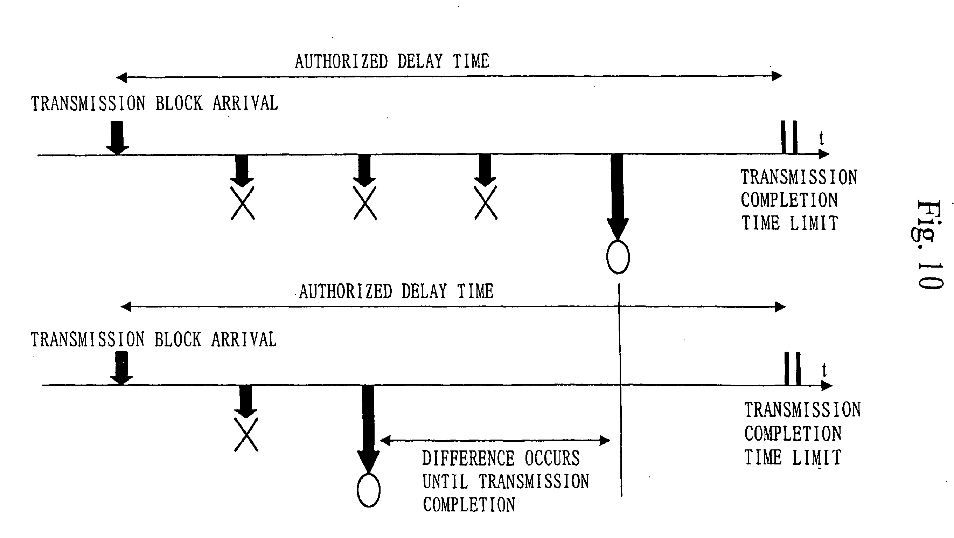

As shown in Fig. 10, it is assumed that for two users, a user A and a user B, for whom the same authorized delay time is defined, the transmission blocks arrive respectively at the same time. However, the number of transmission trials, which is necessary to correctly transmit one transmission block to the receiver side, of the user B can be smaller than that of the user A.

Since these transmission blocks have the same transmission completion time limits, they are treated equally according to the scheduling of the second embodiment. However, as the numbers of transmission trials are different, the time when the transmission finishes for the user A becomes later. If this time is later than the transmission completion time, the transmission block for the user A becomes unnecessary. In this way, even if the given conditions are the same, the result may be unequal according to different numbers of transmission trials.

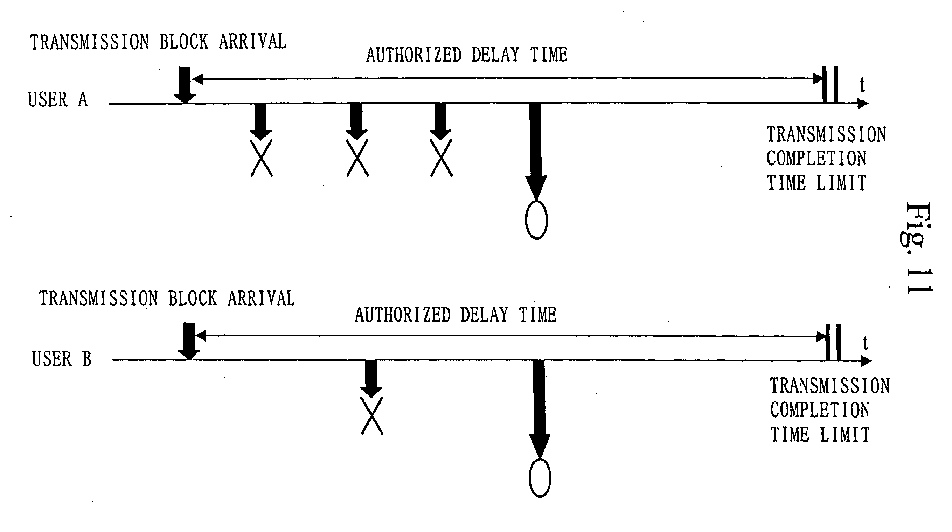

Then, as shown in Fig. 11, the user whose number of transmission trials is large is allowed to do more transmission trials by shortening an interval between the transmission trials, so that the equality can be established between the users.

The coefficient K $(0<K<1)$ has the following features.

When the coefficient K is made small, the interval of the transmission trials becomes shorter, and thus the time until the transmission completion can be shortened. On the contrary, when the coefficient K is made large, the interval of the transmission trials becomes longer, and thus the time until the transmission completion is made delayed.

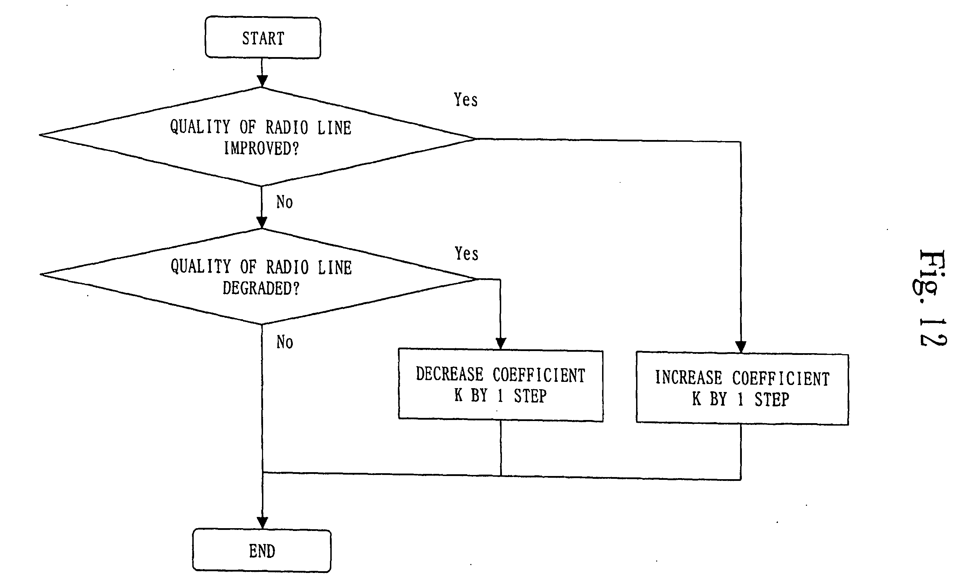

In general, if the quality of the radio line is improved, the number of retransmissions necessary to transmit one transmission block becomes smaller, and on the contrary, if the quality of the radio line is degraded, the necessary number of retransmissions becomes larger. Accordingly, if the quality of the radio line is improved, the coefficient K is increased, and on the contrary, if the quality of the radio line is degraded, the coefficient K is decreased, and thus an appropriate value of coefficient K can be obtained. Fig. 12 shows a flowchart of the operation for determining the value of coefficient K.

Further, in general, if the moving speed of the mobile station is slow, the radio line becomes stable, and thus the number of retransmissions necessary to transmit one transmission block becomes small. On the contrary, if the moving speed of the mobile station is fast, the radio line becomes unstable, and thus the necessary number of the retransmissions becomes large. Based on this, an appropriate value of the coefficient K can be obtained according to the moving speed of the mobile station.

Further, in general, if geographical complexity is low around the mobile station, the radio line becomes stable, and thus the number of retransmission necessary to transmit one transmission block can be small. On the contrary, if the geographical complexity is high around the mobile station, the radio line becomes unstable, and thus the number of retransmission necessary to transmit one transmission block becomes large. By using this, an appropriate value of the coefficient K can be obtained according to the geographical complexity (geographical condition) around the mobile station.

According to the present embodiment, an interval between the arrival time of the transmission block or the arrival time of the retransmission request and the final transmission completion time limit is divided by a ratio obtained by a predetermined coefficient value. The time given by the division is set as the transmission completion time limit for the request, and the coefficient value can vary for each user.

Therefore, by making the coefficient value small to be given to the user whose number of the transmission trials is large, it is possible to transmit preferentially the transmission packet of the user over the other users. To set appropriately the coefficient value makes a time necessary to complete transmission almost equal, and equality can be obtained among the users to whom the same "authorized delay times" are specified. Moreover, by obtaining the coefficient value from the quality of the radio line, the moving speed of the mobile station, or the geographical complexity around the mobile station, it is possible to maintain the equality among the users whose "authorized delay times" are the same.

Further, since the priority is set and scheduling is done based on the "grace time," which is the difference between the transmission completion time limit and the current time, it can be avoided that unnecessary radio resource is assigned to the transmission block of which the "grace time" is still long enough. And thus the unassigned part of radio resource generated by this avoidance can be assigned preferentially to the transmission block of which the "grace time" is short.

This enables to treat equally stream-type data which is sensitive to delay.

Embodiment 4.

In the following, a transmission apparatus according to the fourth embodiment will be explained.

A configuration of a transmission apparatus according to the present embodiment is the same as that of Fig. 4 in the second embodiment.

In the following, the operation will be explained.

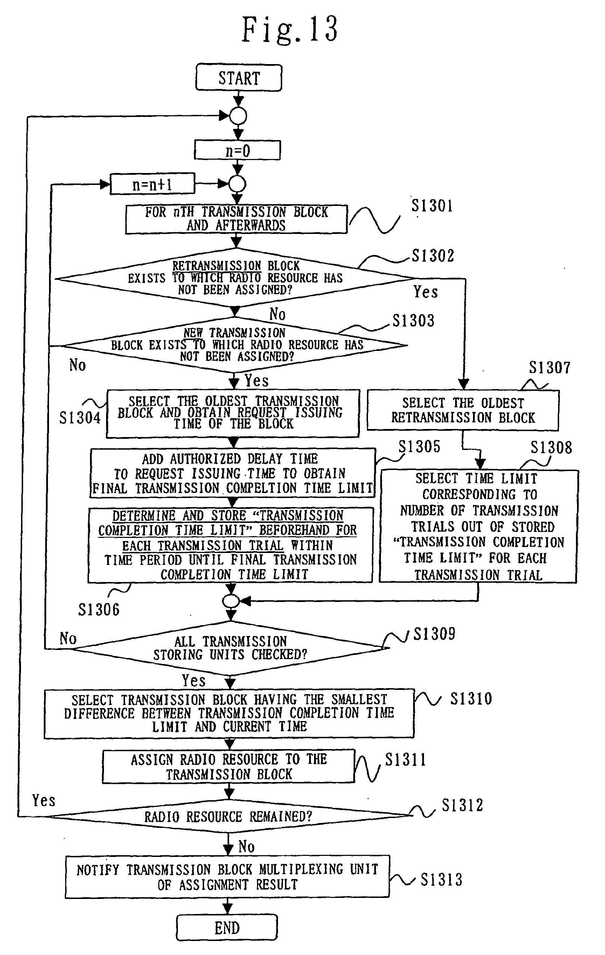

Fig. 13 is a flowchart explaining the operation of the scheduling unit according to the fourth embodiment of this invention.

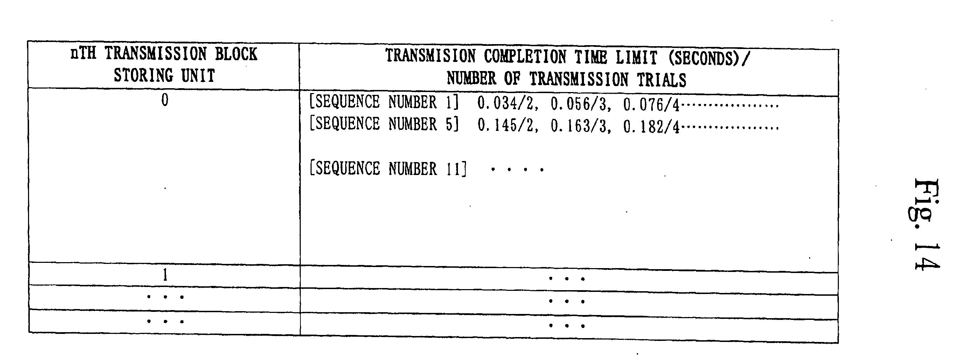

Fig. 14 shows a transmission completion time limit storing table used in the scheduling unit according to the fourth embodiment of this invention.

In Fig. 13, first, it is checked if the retransmission block exists or not for each of the transmission block storing units (S1302).

When the retransmission block does not exist, next it is checked if a new transmission block exists or not (S1303).

When the new transmission block neither exists, such transmission block is skipped.

When the new transmission block exists, the oldest transmission block is selected from the new transmission blocks to which the radio resource has not been assigned, and its request issuing time is obtained from the information attached to the oldest transmission block (S1304).

The authorized delay time is added to the request issuing time, a final transmission completion time limit is obtained (S1305). This final transmission completion time limit shows a targeted deadline until which the transmission of the transmission block is finished.

Further, the transmission completion time limit for each transmission trial is determined within the time before the final transmission completion time limit beforehand and is memorized (S1306). The memorizing is done at the transmission completion time limit storing table shown in Fig. 14.

On the other hand, when the retransmission block exists, the oldest retransmission block is selected from the transmission blocks to which the radio resource has not been assigned yet (S1307).

A sequence number of the selected retransmission block is obtained, and the number of a next transmission trials conducted of the retransmission block is obtained. From the sequence number and the number of next transmission trials conducted, the corresponding transmission completion time limit is obtained out of the transmission completion time limits stored in the transmission completion time limit storing table, and it is set as the transmission completion time limit of the retransmission block (S1308).

The operations thereafter are the same as those of the third embodiment.

Namely, for the new transmission block, a difference between the first transmission completion time limit out of the transmission completion time limits for each of the transmission trials and the current time is obtained. For the retransmission block, a difference between the transmission completion time limit obtained from the transmission completion time limit storing table and the current time is obtained. The transmission block which has the smallest difference with the current time is specified as the transmission object.

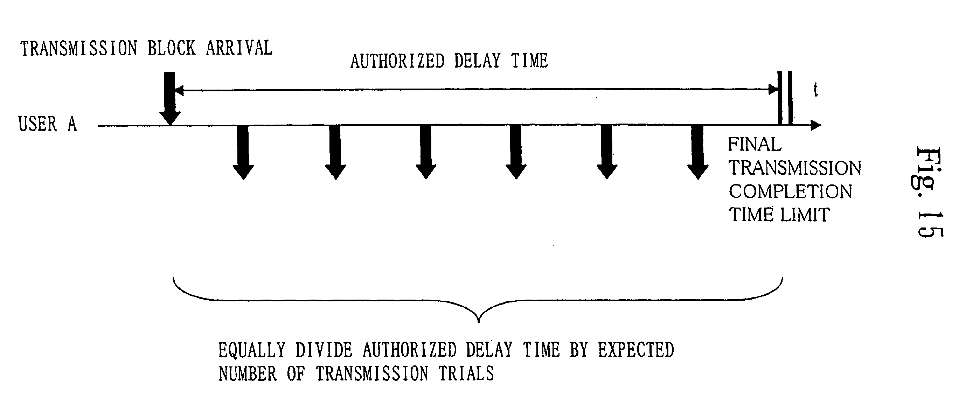

Fig. 15 is an explanatory drawing for explaining the operation of the scheduling unit according to the fourth embodiment. Here, a time period until the final transmission completion time limit obtained at arrival time of the transmission block is equally divided by an expected number of the transmission trials. Each timing of the equally divided time period is set as the transmission completion time limit for each transmission trial.

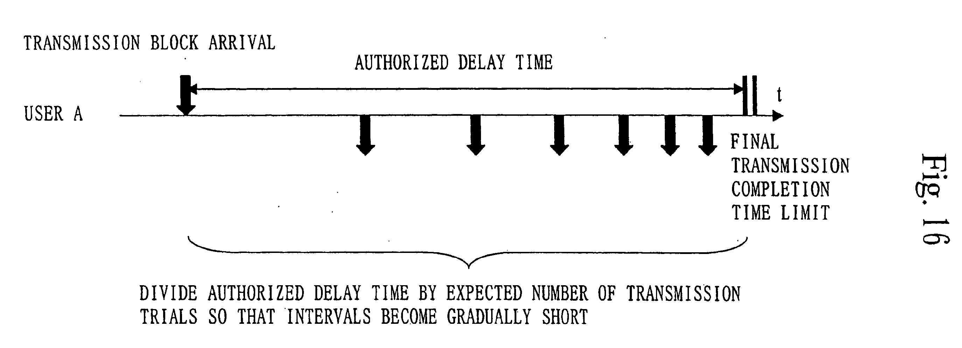

Fig. 16 is an explanatory drawing for explaining another operation of the scheduling unit according to the fourth embodiment. Here, a time period until the final transmission completion time limit obtained at arrival of the transmission block is divided by an expected number of the transmission trials so that intervals of the divided time period become gradually short. Each timing of the divided time period is set as the transmission completion time limit for each of the transmission trials. Generally, the possibility of completing the transmission of the transmission block by the first transmission trial is the highest, and as the number of the transmission trials increases, the possibility becomes lower. Therefore, with a distribution shown here, the possibility to press the transmission block for another user becomes lower.

Here, the "expected number of the transmission trials" can be the maximum number of the retransmissions defined by the retransmission controlling unit, or it can be obtained by probability based on the quality of the radio line.

According to the present embodiment, the "transmission completion time limit" is determined beforehand for each of the transmission trials when the new transmission block arrives.

Therefore, it is unnecessary to calculate the transmission completion time limit for each generation of the retransmission block.

Further, since the priority is set and scheduling is done based on the "grace time," which is the difference between the transmission completion time limit and the current time, it can be avoided that unnecessary radio resource is assigned to the transmission block of which the "grace time" is still long enough. And thus the unassigned part of radio resource generated by this avoidance can be assigned preferentially to the transmission block of which the "grace time" is short.

By doing so, it becomes possible to treat equally stream-type data which is sensitive to delay.

Embodiment 5.

In the following, a transmission apparatus according to the fifth embodiment will be explained.

A configuration of the transmission apparatus in relation to this embodiment is the same as that of Fig. 4 in the second embodiment.

Next, the operation will be explained.

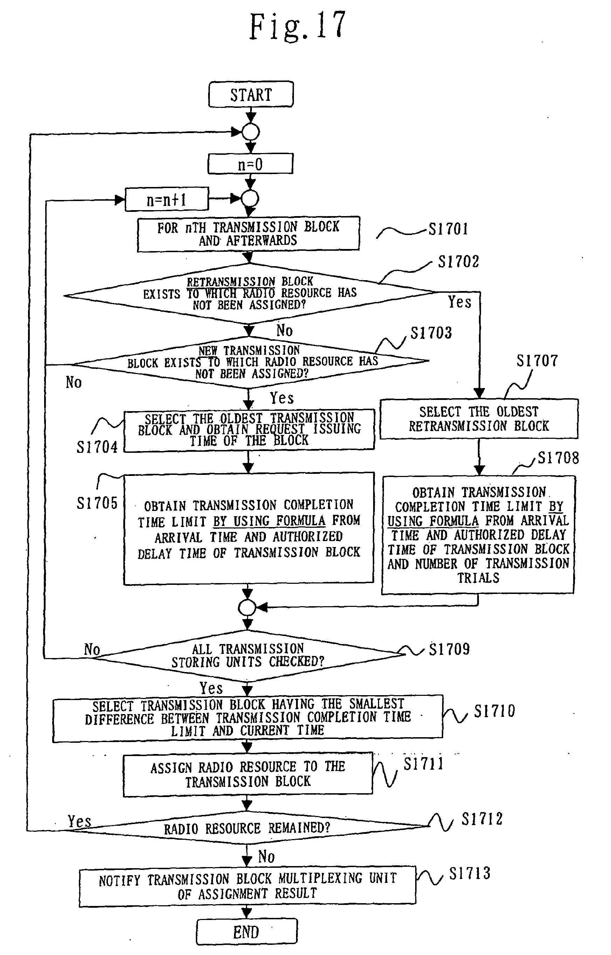

Fig. 17 is a flowchart explaining the operation of a scheduling unit according to the fifth embodiment of this invention.

In Fig. 17 it is checked if the retransmission block exists or not for each transmission block storing unit (S1702).

When the retransmission block does not exist, next, it is checked if a new transmission block exists or not (S1703).

When the new transmission block neither exists, such transmission block storing unit is skipped.

When the new transmission blocks exist, the oldest transmission block is selected out of the new transmission blocks to which the radio resource has not been assigned, and its request issuing time is obtained from the information attached to the corresponding transmission block (S1704).

From the arrival time of the transmission block and the authorized delay time, the transmission completion time limit is obtained by using a formula (S1705).

On the other hand, when the retransmission block exists, the oldest retransmission block is selected from the transmission blocks to which the radio resource has not been assigned yet (S1707).

From the arrival time of the transmission block, the authorized delay time, and the number of transmission trials conducted, the transmission completion time limit is obtained by using the formula (S1708).

The operations thereafter are the same as those of the fourth embodiment.

As the formula, for instance, the following is used:

$$y = (-a^x + 1) \times \text{Tau} + T_{arrival}$$

where

a: coefficient $(0 < a < 1)$
$T_{arrival}$: arrival time of transmission block
Tau: authorized delay time
x: number of transmission trials conducted
y: transmission completion time limit

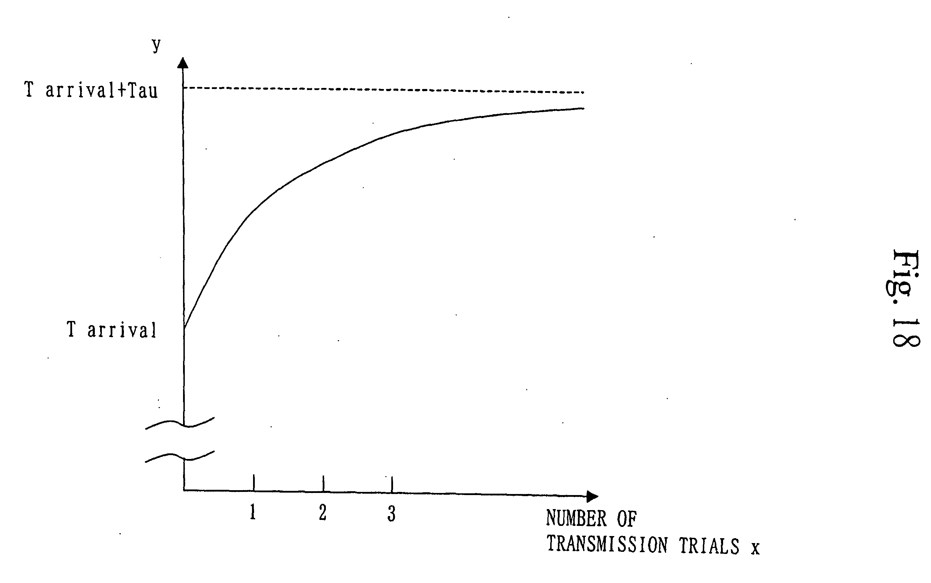

Fig. 18 shows the above formula in graph form. As shown in Fig. 18, as the number of the transmission trials increases, it approaches to $T_{arrival}$ + Tau, namely, the final transmission completion time limit.

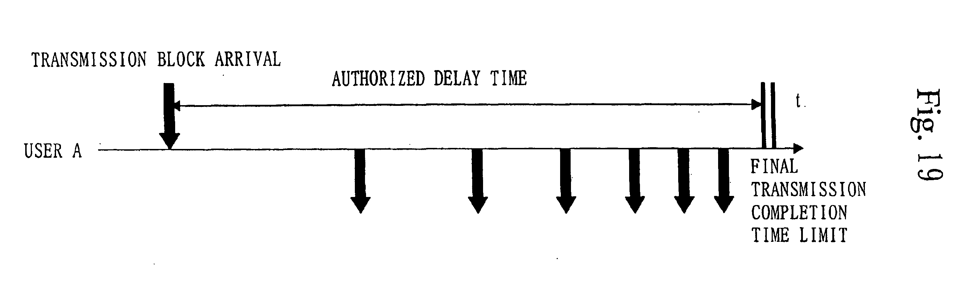

By using the above formula, as a result, as shown in Fig. 19, the transmission completion time limit can be calculated for each transmission trial.

According to the present embodiment, every time when the new transmission block arrives or when the retransmission block is generated, the transmission completion time limit of the transmission block is obtained by using the formula.

Therefore, it is unnecessary to memorize the transmission completion time limit for each transmission trial.

Further, since the priority is set and scheduling is done based on the "grace time," which is the difference between the transmission completion time limit and the current time, it can be avoided that unnecessary radio resource is assigned to the transmission block of which the "grace time" is still long enough. And thus the unassigned part of radio resource generated by this avoidance can be assigned preferentially to the transmission block of which the "grace time" is short.

By doing so, it becomes possible to treat equally stream-type data which is sensitive to delay.

Embodiment 6.

Hereinafter, a transmission apparatus according to the sixth embodiment will be explained.

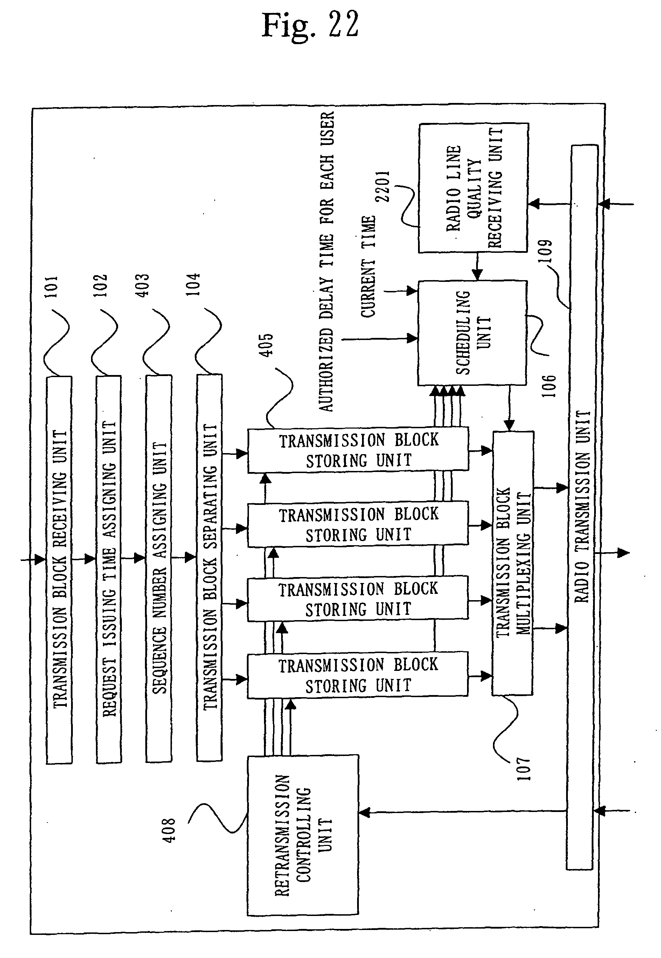

Fig. 22 is a configuration diagram of a transmission apparatus constituting a radio communication system according to the sixth embodiment of the invention.

In Fig. 22, a reference numeral 2201 shows a radio line quality receiving unit.

The other parts are the same as those of Fig. 4 in the second embodiment.

Next, the operation of the radio line quality receiving unit 2201 will be explained.

The radio line quality receiving unit 2201 receives the radio line quality information collected/sent by each of the mobile stations (mobile communication apparatus), computes and stores "instant line quality" and "average line quality" of each mobile station, and supplies such information to the scheduling unit 106 when needed. Here, the line quality means the line quality of the radio line between each mobile station and the transmission apparatus, and shows that the better the line quality is, the better the status of receiving data at the mobile station becomes.

Here, the radio line quality receiving unit 2201 corresponds to an example of a data receipt status information receiving unit.

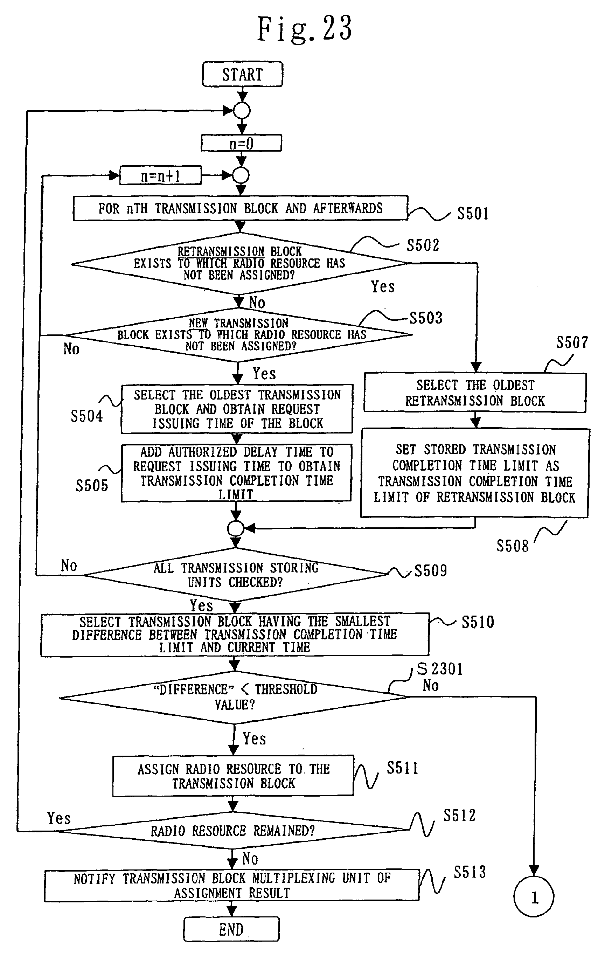

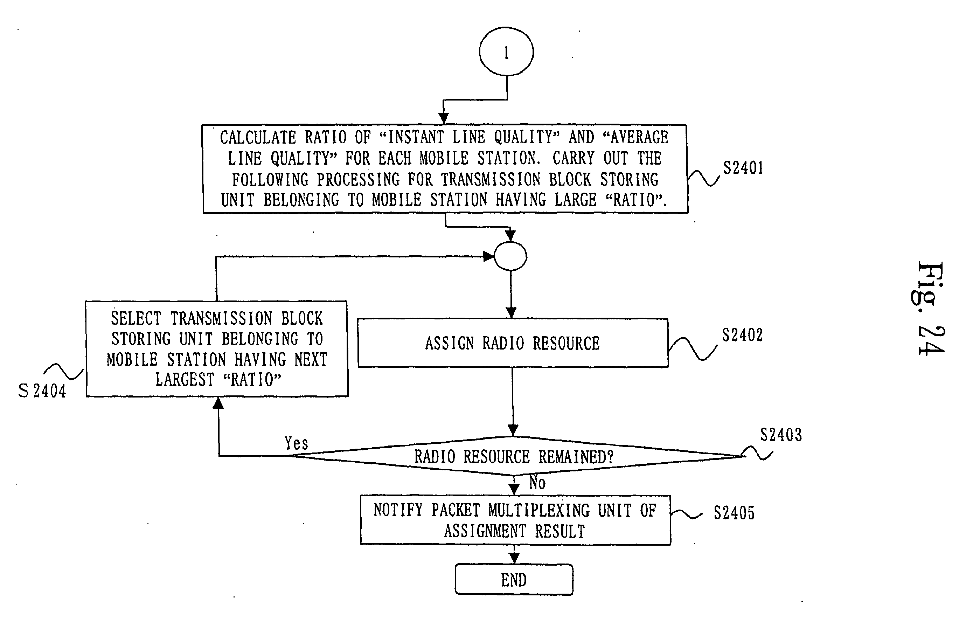

Figs. 23 and 24 are flowcharts explaining the operation of the scheduling unit 106 according to the sixth embodiment of the invention.

In Fig. 23, steps S501 through S510 are the same as ones in Fig. 5, and the explanation will be omitted.

After selecting the transmission block having the smallest difference between the transmission completion time limit and the current time at step S510, the scheduling unit 106 compares the "difference" between the transmission completion time limit and the current time and a predetermined "threshold value" (S2301), and if the "threshold value" is larger, the operation proceeds to the process of assigning the radio resource to the corresponding transmission block (S511).

If the "difference" is larger at step S2301, the operation proceeds to the flowchart shown in Fig. 24.

In Fig. 24, the scheduling unit 106 computes a ratio of the "instant line quality" to the "average line quality" of each mobile station provided by the radio line quality receiving unit 2201 (analyzes the status of receiving data for each mobile station), and carries out the following process for the transmission block storing unit belonging to the mobile station having a large "ratio" (S2401). Here, the "ratio" shows that the larger it is, the better the data receipt status of the mobile station is.

The radio resource is assigned to the transmission block of the corresponding transmission block storing unit (S2402).

It is checked if the radio resource remains or not (S2403).

If there remains, the process is repeated for the transmission block storing unit belonging to the mobile station having the second largest "ratio" (S2404).

If no radio resource remains, the transmission block multiplexing unit is notified of the assignment result (S2405).

In this way, according to the present embodiment, the scheduling unit 106 analyzes the data receiving status for each mobile station and assigns the radio resource preferentially to the transmission block stored in the transmission block storing unit corresponding to the mobile station of which the data receiving status is good.

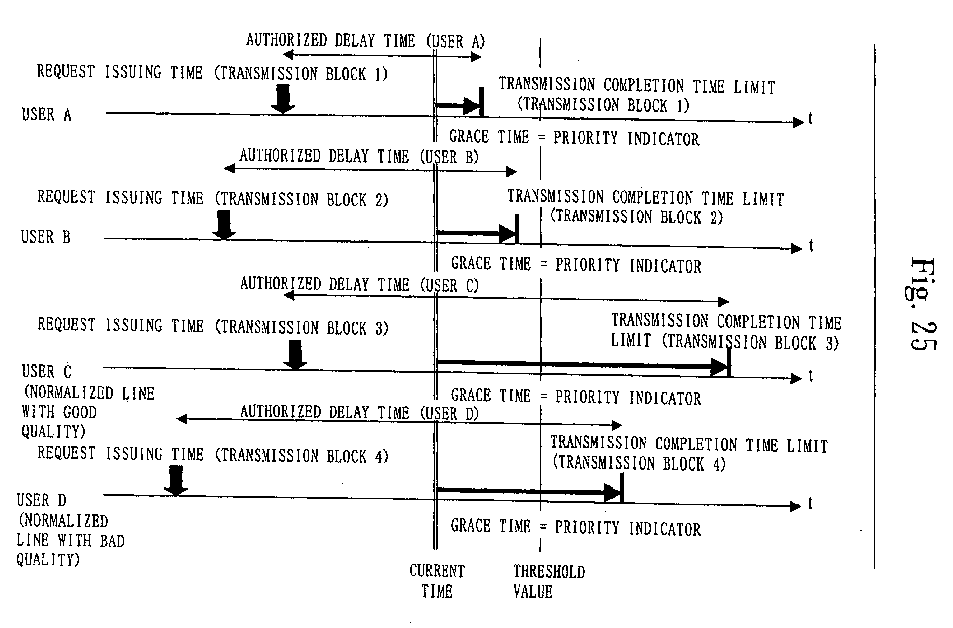

Fig. 25 shows an explanatory diagram for explaining the operation of the scheduling unit according to the sixth embodiment.

A case is shown in which the "transmission blocks 1 through 4" to be scheduled exist at the "current time." It is assumed that the transmission blocks 1 through 4 are stored in different transmission block storing units, respectively.

By adding the authorized delay time to each request issuing time, the "transmission completion time limit" is obtained, and a difference between the "current time" and the "transmission completion time limit" corresponds to the "grace time."

For the "transmission block" of which the "transmission completion time limit" is marked before the "current time + threshold value" (Yes at step S2301 in Fig. 23), namely, in case of the "transmission block" having a small grace time, the scheduling is carried out in the manner explained in the first through fifth embodiments. That is, as for the transmission block 1 for the user A and the transmission block 2 for the user B, the radio resource is assigned preferentially to the transmission block 1 and then to the transmission block 2.

On the other hand, for the "transmission block" of which the "transmission completion time limit" is marked after the "current time + threshold value" (No at step S2301 in Fig. 23), namely, in case of the "transmission block" having an enough grace time, the scheduling is carried out according to another algorithm, since there is no need to strictly follow the priority based on the grace time.

For instance, the scheduling is carried out using "normalized line quality," which is obtained from the "instant line quality" notified by each user (each mobile station) by normalizing with the "average line quality" of each user (each mobile station), as a priority indicator

In Fig. 25, when the "normalized line quality" is compared between the user C and the user D, the "normalized line quality" of the user C is higher (the data receiving status of the user C is better). Therefore, if there remains, the radio resource is assigned preferentially to the user C. Then, the radio resource is assigned to the transmission block 4 for the user D.

Here, the scheduling algorithm using the "normalized line quality" is only one of examples, and scheduling can be carried out according to another algorithm.

As discussed above, according to the present embodiment, for the user of which the "grace time" which is the difference between the completion time limit and the current time is smaller than the "threshold value," the scheduling is done by a priority of the "grace time." Accordingly, unnecessary assignment of the radio resource to the transmission block having an enough large "grace time" can be avoided. In addition, unassigned radio resource generated by this avoidance can be assigned preferentially to the transmission block having a small "grace time."

Further, for the user of which the "grace time" is larger than the "threshold value," the scheduling is done, for example, based on the "normalized line quality," while the radio resource can be assigned preferentially to the user whose line quality status is good, and thus the throughput can be improved.

This enables to equally treat the streaming type data which is sensitive to delay and also to improve the throughput.

In the foregoing first through sixth embodiments, the transmission apparatus in the radio communication system has been discussed as an example; however, the contents that have been shown in the first through sixth embodiments can be applied to a transmission apparatus of a wired communication system.

Further, in the first through sixth embodiments, the transmission apparatus has been discussed as an example of the data transmission apparatus according to the present invention; however, it is also possible to implement a data transmission method according to the present invention using the operational procedure shown in the first through sixth embodiments.

Hereinafter, the features of the transmission apparatus shown in the first through sixth embodiments will be restated.

A transmission apparatus shown in the first embodiment is characterized to include:

> a function to obtain a transmission completion time limit for each transmission block; and
> a function to send preferentially the transmission block of which the difference between a transmission completion time limit and a current time is small.

The transmission apparatus shown in the first embodiment is characterized to include a function to obtain a transmission completion time limit for each transmission block by adding an authorized delay time to an arrival time of the transmission block.

A transmission apparatus shown in the second embodiment is characterized to include:

> a function to issue a retransmission request for the transmission block which has not been received correctly by a receiver side;
a function to generate a retransmission block on receiving the retransmission request from the receiver side;
for a transmission block that has newly arrived, a function to obtain a transmission completion time limit of a first transmission trial for the transmission block;
a function to obtain transmission completion time limits of second and thereafter transmission trials for the transmission block; and
a function to send preferentially from a transmission block of which a difference between a transmission completion time limit and a current time is small.

The transmission apparatus shown in the second embodiment is characterized to include:

> a function to obtain the transmission completion time limit of the first transmission trial using an arrival time of the transmission block and an authorized delay time; and
> a function to set transmission completion time limits of second and thereafter transmission trials the same as the transmission completion time limit of the first transmission trial.

A transmission apparatus shown in the third embodiment is characterized to include:

> a function to obtain a transmission completion time limit of a transmission block that has been newly arrived using an arrival time of the transmission block and an authorized delay time;
> a function to obtain a transmission completion time limit of the first transmission trial by adding the authorized delay time multiplied by a coefficient to the arrival time; and
> a function to obtain transmission completion time limits of the second and thereafter transmission trials by adding a difference between a time when a retransmission request has been received and a final transmission completion time limit multiplied by the same coefficient as above to the time when the retransmission request has been received.

The transmission apparatus shown in the third embodiment is characterized to include a function to set different coefficients for respective users.

The transmission apparatus shown in the third embodiment is characterized to include a function to determine the coefficient according to radio line quality of each user.

The transmission apparatus shown in the third embodiment is characterized to include a function to determine the coefficient according to a moving speed of the user.

The transmission apparatus shown in the third embodiment is characterized to include a function to determine the coefficient according to location information of the user.

A transmission apparatus shown in the fourth and fifth embodiments is characterized to include a function to obtain transmission completion time limits of the first, the second and thereafter transmission trials using an arrival time and an authorized delay time of the transmission block and the number of transmission trials conducted.

A transmission apparatus shown in a sixth embodiment is characterized to include a function to assign radio resource based on another scheduling standard when an authorized delay time is larger than a predetermined "threshold value."

Industrial Applicability

According to the present invention, since a transmission object is specified out of transmission candidate data based on a grace time which is a difference between a transmission completion time limit and a current time, it is possible to send preferentially from the transmission candidate data having a small grace time. This enables to maintain equality among the transmission candidate data, and thus appropriate transmission can be carried out without generating delay even if the transmission candidate data is streaming type data which is sensitive to delay.

Further, according to the present invention, when the retransmission requested data is included, the grace time which is a difference between the transmission completion time and the current time is obtained also for the retransmission requested data and the transmission object is specified based on the grace time. Therefore, even if the retransmission requested data is included, it is possible to transmit preferentially the transmission candidate data of which the grace time is small, accordingly the equality among the transmission candidate data can be established, and thus appropriate transmission can be carried out without generating delay even if the transmission candidate data is streaming type data which is sensitive to delay.

Further, according to the present invention, when the transmission candidate data is the transmission queuing data, an interval between the arrival time of the transmission candidate data and the first transmission completion time is divided, when the transmission candidate data is the retransmission requested data, an interval between the arrival time of the retransmission request and the first transmission completion time is divided, by a ratio which can be obtained by a certain coefficient value. The time obtained by the division is set as the second transmission completion time, and the transmission object is specified among the transmission candidate data based on a difference between the second transmission completion time and the current time. In addition, the coefficient value is made variable. Consequently, by setting an appropriate coefficient value for each transmission candidate data, it is possible to approximate times necessary to complete the transmission among the transmission candidate data, and thus the equality of the transmission candidate data can be established.

Further, according to the present invention, since the coefficient value is determined for each transmission candidate data based on the communication line quality, the moving speed of the mobile communication apparatus, or the geographic condition of the location of the mobile communication apparatus, the equality of the transmission candidate data can be established.

Further, according to the present invention, since the transmission completion time is specified for each transmission trial of the transmission candidate data which is the transmission queuing data and the transmission completion time is memorized for each transmission trial specified, to the retransmission requested data, it is possible to apply the transmission completion time corresponding to the number of transmission trials conducted among the transmission completion time stored. Consequently, there is no need to obtain the transmission completion time for each generation of the retransmission requested data.

Yet further, according to the present invention, for any of the transmission candidate data which is the transmission queuing data and the transmission candidate data which is the retransmission requested data, the transmission completion times are respectively obtained based on the arrival time, the authorized delay time, and the number of transmission trials conducted. Consequently, even if the retransmission requested data is included, the equality among the transmission candidate data can be established without memorizing the transmission completion time.

**Claims**

1. A data transmission apparatus carrying out data transmission and comprising:

   a plurality of data storing units respectively being capable to store at least one piece of transmission queuing data which is awaiting transmission;
   a data specifying unit for selecting specific transmission queuing data as transmission candidate data out of the transmission queuing data stored in each data storing unit, specifying a transmission completion time for each transmission candidate data, obtaining a difference between the transmission completion time and a current time, and specifying specific transmission candidate data as a transmission object based on the difference between the transmission completion time and the current time for each transmission candidate data; and

a data transmitting unit for transmitting the transmission candidate data specified as the transmission object by the data specifying unit.

2. The data transmission apparatus of claim 1, wherein the data specifying unit specifies the transmission candidate data of which the difference between the transmission completion time and the current time is smallest as the transmission object.

3. The data transmission apparatus of claim 1,

wherein the data transmission apparatus carries out data transmission of data received from another apparatus, and

wherein the data specifying unit obtains an arrival time and an authorized delay time for each transmission candidate data, adds the arrival time and the authorized delay time obtained, and sets a value obtained by the adding as the transmission completion time of each transmission candidate data.

4. The data transmission apparatus of claim 1 further comprising

a retransmission controlling unit for receiving a retransmission request for the data transmitted by the data transmitting unit and instructing the data storing unit which has stored retransmission requested data of which retransmission is requested to generate the retransmission requested data,

wherein each data storing unit generates the retransmission requested data instructed when generation of the retransmission requested data is instructed by the retransmission controlling unit and stores the retransmission requested data generated, and

wherein the data specifying unit checks existence of the retransmission requested data stored for each data storing unit, for the data storing unit without storing the retransmission requested data, selects specific transmission queuing data as transmission candidate data from the transmission queuing data stored, and for the data storing unit storing at least one piece of the retransmission requested data, selects specific retransmission requested data as the transmission candidate data from the retransmission requested data stored.

5. The data transmission apparatus of claim 4 further comprising

a transmission completion time storing unit, when the transmission completion time for the transmission candidate data which is the transmission queuing data is specified by the data specifying unit, for storing the transmission completion time specified by relating with the corresponding transmission candidate data,

wherein the data specifying unit, when one of the retransmission requested data is selected as the transmission candidate data, obtains the transmission completion time related with the transmission candidate data selected from the transmission completion time storing unit, and sets the transmission completion time obtained as the transmission completion time of the transmission candidate data selected.

6. The data transmission apparatus of claim 1,

wherein the data transmission apparatus carries out data transmission of data received from another apparatus, and

wherein the data specifying unit obtains an arrival time and an authorized delay time for each transmission candidate data, multiplies a coefficient defined for each transmission candidate data with the authorized delay time, adds the arrival time to a value obtained by the multiplying, and sets a value obtained by the adding as the transmission completion time of each transmission candidate data.

7. The data transmission apparatus of claim 4,

wherein the data transmission apparatus carries out data transmission received from another apparatus,

wherein the data transmission apparatus further comprises a transmission completion time storing unit, when a first transmission completion time for the transmission candidate data which is the transmission queuing data is specified by the data specifying unit, for storing the first transmission completion time specified by relating with the corresponding transmission candidate data,

wherein the data specifying unit:

checks the existence of the retransmission requested data stored for each data storing unit, for the data storing unit without storing the retransmission requested data, selects specific transmission queuing data as the transmission candidate data from the transmission queuing data stored, and for the data storing unit storing at least one piece of the retransmission requested data, selects specific retransmission requested data as the transmission candidate data from the retransmission requested data stored;

for the transmission candidate data which is the transmission queuing data, obtains an arrival time and an authorized delay time for each transmission candidate data, adds the arrival time and the authorized delay time obtained, and sets a value obtained by the adding as the first transmission completion time of each transmission candidate data, multiplies a coefficient defined for each transmission candidate data with the authorized delay time, adds the arrival time to a value obtained by the multiplying, and sets a value obtained by the adding as a second transmission completion time of each transmission candidate data;

for the transmission candidate data which is the retransmission requested data, obtains an arrival time of the retransmission request for each transmission candidate data, obtains the first transmission completion time related to each transmission candidate data from the transmission completion time storing unit, subtracts the arrival time of the retransmission request from the first transmission completion time obtained, multiplies a coefficient defined for each transmission candidate data with a value obtained by the subtracting, adds the arrival time to a value obtained by the multiplying, and specifies a value obtained by the adding as the second transmission completion time; and

obtains a difference between the second transmission completion time and the current time for each transmission candidate data, and specifies specific transmission candidate data as the transmission object based on the difference between the second transmission completion and the current time for each transmission candidate data.

8. The data transmission apparatus of claim 7 further comprising

a coefficient value determining unit for determining a value of the coefficient based on quality of a communication line used for transmitting the transmission candidate data, for each transmission candidate data.

9. The data transmission apparatus of claim 7 further comprising

a coefficient value determining unit for determining a value of the coefficient based on moving speed of a mobile communication apparatus which is a destination of the transmission candidate data, for each transmission candidate data.

10. The data transmission apparatus of claim 7 further comprising

a coefficient value determining unit for determining a value of the coefficient based on geographical condition of a location of a mobile communication apparatus which is a destination of the transmission candidate data, for each transmission candidate data.

11. The data transmission apparatus of claim 4, wherein the data transmission apparatus carries out data transmission of data received from another apparatus,

wherein the data transmission apparatus further comprises a transmission completion time storing unit, when a transmission completion time for each transmission trial is specified for the transmission candidate data which is the transmission queuing data by the data specifying unit, for storing the transmission completion time for each transmission trial specified by relating with the corresponding transmission candidate data,

wherein the data specifying unit:

checks the existence of the retransmission requested data stored for each data storing unit, for the data storing unit without storing the retransmission requested data, selects specific transmission queuing data as the transmission candidate data from the transmission queuing data stored, and for the data storing unit storing at least one piece of the retransmission requested data, selects specific retransmission requested data as the transmission candidate data from the retransmission requested data stored;

for the transmission candidate data which is the transmission queuing data, specifies the transmission completion time for each transmission trial based on a number of transmission trials defined for each transmission candidate data, and obtains a difference between the transmission completion time for a first transmission trial out of the transmission completion time specified and the current time;

for the transmission candidate data which is the retransmission requested data, checks a next number of transmission trials conducted, obtains a transmission completion time for the next number of transmission trials conducted from the transmission completion time storing unit, and obtains a difference between the transmission completion time obtained and the current time; and

specifies specific transmission candidate data as the transmission object based on the difference between the transmission completion time for each transmission candidate data and the current time.

12. The data transmission apparatus of claim 11, wherein the data specifying unit specifies the transmission completion time for each transmission trial by equally setting intervals of the transmission completion times.

13. The data transmission apparatus of claim 11, wherein the data specifying unit specifies the transmission completion time for each transmission trial by setting intervals of transmission completion times so that later transmission trials have shorter intervals.

14. The data transmission apparatus of claim 1,
    wherein the data transmission apparatus carries out data transmission of data received from another apparatus,
    wherein the data specifying unit obtains an arrival time and an authorized delay time for each transmission candidate data, checks a number of transmission trial conducted for each transmission candidate data, and specifies the transmission completion time for each transmission candidate data based on the arrival time, the authorized delay time, and the number of transmission trials conducted.

15. A data transmission method for carrying out data transmission comprising:

    a data specifying step for selecting at least two pieces of transmission queuing data from a plurality pieces of transmission queuing data which are awaiting transmission, specifying transmission completion time for each transmission candidate data, obtaining a difference between the transmission completion time and a current time, and specifying specific transmission candidate data as a transmission object based on the difference between the transmission completion time for each transmission candidate data and the current time; and
    a data transmitting step for transmitting the transmission candidate data specified as the transmission object by the data specifying step.

16. The data transmission method of claim 15, wherein the data specifying step specifies the transmission candidate data of which the difference between the transmission completion time and the current time is smallest as the transmission object.

17. The data transmission method of claim 15,
    wherein the data transmission method carries out data transmission of data received from another communication method, and
    wherein the data specifying step obtains an arrival time and an authorized delay time for each transmission candidate data, adds the arrival time and the authorized delay time obtained, and sets a value obtained by the adding as the transmission completion time of each transmission candidate data.

18. The data transmission apparatus of claim 1,
    wherein the data specifying unit specifies the transmission completion time for each transmission candidate data, obtains the difference between the transmission completion time and the current time, specifies the transmission candidate data of which the difference between the transmission completion time and the current time is smaller than a predetermined threshold value as the transmission object, and determines if the transmission candidate data of which the difference between the transmission completion time and the current time is larger than the predetermined threshold value is to be specified as the transmission object or not based on a different criteria other than the difference between the transmission completion time and the current time.

19. The data transmission apparatus of claim 18,
    wherein the data transmission apparatus carries out data transmission to a plurality of mobile communication apparatuses;
    wherein the data transmission apparatus further comprises a data receipt status information receiving unit for receiving information related to data receipt status of each mobile communication apparatus from each mobile communication apparatus; and
    wherein the data specifying unit, when the transmission candidate data exists of which the difference between the transmission completion time and the current time is larger than the predetermined threshold value, analyses the data receipt status of each mobile communication apparatus based on the information related to the data receipt status received from each mobile communication apparatus, and determines if the transmission candidate data of which the difference between the transmission completion time and the current time is larger than the predetermined threshold value is to be specified as the transmission object or not based on an analysis result.

20. The data transmission apparatus of claim 19,
    wherein each of the plurality of data storing units is related to any one of the plurality of mobile communication apparatuses;
    the data specifying unit, when the transmission candidate data exists of which the difference between the transmission completion time and the current time is larger than the predetermined threshold value, analyses for each data storing unit the data receipt status of each mobile communication apparatus corresponding to each data storing unit, and preferentially specifies the transmission queuing data stored in the data storing unit to which the data receipt status of the mobile communication apparatus corresponding is good as the transmission object.

# Fig. 1

TRANSMISSION BLOCK
RECEIVING UNIT — 101

REQUEST ISSUING TIME
ASSIGNING UNIT — 102

TRANSMISSION BLOCK
SEPARATING UNIT — 104

TRANSMISSION BLOCK STORING UNIT
TRANSMISSION BLOCK STORING UNIT
TRANSMISSION BLOCK STORING UNIT
TRANSMISSION BLOCK STORING UNIT — 105

AUTHORIZED DELAY TIME FOR EACH USER

CURRENT TIME

SCHEDULING UNIT — 106

TRANSMISSION BLOCK
MULTIPLEXING UNIT — 107

RADIO TRANSMISSION UNIT — 109

# Fig. 2

```
              ┌─────────┐
              │  START  │
              └────┬────┘
                   │
            ┌──────○◄──────────────────────┐
            │  ┌───┴───┐                    │
            │  │  n=0  │                    │
            │  └───┬───┘                    │
            │      │                        │
    ┌───────┐   ┌──○◄─────────┐             │
    │ n=n+1 ├──►│             │             │
    └───────┘   └──┬──────────┘             │
                   │                        │
      ┌────────────┴────────────┐           │
      │  FOR nTH TRANSMISSION    │  ～S201   │
      │  BLOCK AND AFTERWARDS    │           │
      └────────────┬────────────┘           │
                   │                        │
              ╱────┴────╲                   │
            ╱  TRANSMISSION ╲    ～S203      │
          ╱    BLOCK EXISTS   ╲              │
      No ╱   TO WHICH RADIO     ╲            │
     ◄──◄     RESOURCE HAS      ╱            │
          ╲ NOT BEEN ASSIGNED?╱             │
            ╲────────────────╱              │
                   │ Yes                    │
      ┌────────────┴────────────┐           │
      │ SELECT THE OLDEST        │ ～S204    │
      │ TRANSMISSION BLOCK AND   │           │
      │ OBTAIN REQUEST ISSUING   │           │
      │ TIME OF THE BLOCK        │           │
      └────────────┬────────────┘           │
                   │                        │
      ┌────────────┴────────────┐           │
      │ ADD AUTHORIZED DELAY     │ ～S205    │
      │ TIME TO REQUEST ISSUING  │           │
      │ TIME TO OBTAIN           │           │
      │ TRANSMISSION COMPLETION  │           │
      │ TIME LIMIT               │           │
      └────────────┬────────────┘           │
                   │                        │
              ╱────┴────╲                   │
     No     ╱   ALL       ╲    ～S209        │
     ◄─────◄ TRANSMISSION  ╲                │
            ╲ STORING UNITS ╱               │
            ╲  CHECKED?    ╱                │
              ╲──────────╱                  │
                   │ Yes                    │
      ┌────────────┴────────────┐           │
      │ SELECT TRANSMISSION      │ ～S210    │
      │ BLOCK HAVING THE SMALLEST│           │
      │ DIFFERENCE BETWEEN       │           │
      │ TRANSMISSION COMPLETION  │           │
      │ TIME LIMIT AND CURRENT   │           │
      │ TIME                     │           │
      └────────────┬────────────┘           │
                   │                        │
      ┌────────────┴────────────┐           │
      │ ASSIGN RADIO RESOURCE TO │ ～S211    │
      │ THE TRANSMISSION BLOCK   │           │
      └────────────┬────────────┘           │
          Yes   ╱──┴──╲                      │
         ◄─────◄ RADIO ╲   ～S212           │
                ╲RESOURCE╱──────────────────┘
                ╲REMAINED?╱
                   │ No
      ┌────────────┴────────────┐
      │ NOTIFY TRANSMISSION      │ ～S213
      │ BLOCK MULTIPLEXING UNIT  │
      │ OF ASSIGNMENT RESULT     │
      └────────────┬────────────┘
              ┌─────┴────┐
              │   END    │
              └──────────┘
```

**Fig. 3**

AUTHORIZED DELAY TIME (USER A)

REQUEST ISSUING TIME (TRANSMISSION BLOCK 1)

TRANSMISSION COMPLETION TIME LIMIT
(TRANSMISSION BLOCK 1)

GRACE TIME
= PRIORITY INDICATOR

t

AUTHORIZED DELAY TIME (USER B)

REQUEST ISSUING TIME (TRANSMISSION BLOCK 2)

USER B

TRANSMISSION COMPLETION TIME LIMIT
(TRANSMISSION BLOCK 2)

GRACE TIME
= PRIORITY INDICATOR

t

AUTHORIZED DELAY TIME (USER C)

REQUEST ISSUING TIME (TRANSMISSION BLOCK 3)

USER C

TRANSMISSION COMPLETION TIME LIMIT
(TRANSMISSION BLOCK 3)

GRACE TIME
= PRIORITY INDICATOR

t

CURRENT TIME

# Fig. 4

TRANSMISSION BLOCK RECEIVING UNIT — 101

REQUEST ISSUING TIME ASSIGNING UNIT — 102

SEQUENCE NUMBER ASSIGNING UNIT — 403

TRANSMISSIN BLOCK SEPARATING UNIT — 104

408 — RETRANSMISSION CONTROLLING UNIT

TRANSMISSION BLOCK STORING UNIT

TRANSMISSION BLOCK STORING UNIT

TRANSMISSION BLOCK STORING UNIT

TRANSMISSION BLOCK STORING UNIT — 405

AUTHORIZED DELAY TIME FOR EACH USER

CURRENT TIME

SCHEDULING UNIT — 106

107 — TRANSMISSION BLOCK MULTIPLEXING UNIT

RADIO TRANSMISSION UNIT — 109

# Fig. 5

```
                    START

                      ○

                    n=0

        n=n+1        ○

      FOR nTH TRANSMISSION BLOCK          S501
           AND AFTERWARDS

           RETRANSMISSION BLOCK           S502    Yes
      EXISTS TO WHICH RADIO RESOURCE HAS
           NOT BEEN ASSIGNED?

                   No
              NEW TRANSMISSION            S503
      BLOCK EXISTS TO WHICH RADIO RESOURCE HAS
No           NOT BEEN ASSIGNED?                           S507

              Yes
      SELECT THE OLDEST TRANSMISSION        SELECT THE OLDEST
             BLOCK AND                   RETRANSMISSION BLOCK
      OBTAIN REQUEST ISSUING TIME OF
S504         THE BLOCK
                                                        S508

      ADD AUTHORIZED DELAY TIME TO        SET STORED TRANSMISSION
      REQUEST ISSUING TIME TO OBTAIN      COMPLETION TIME LIMIT AS
S505  TRANSMISSION COMPLETION TIME         TRANSMISSION COMPLETION
             LIMIT                             TIME LIMIT OF
                                           RETRANSMISSION BLOCK

                      ○

No       ALL TRANSMISSION STORING            S509
              UNITS CHECKED?

              Yes
      SELECT TRANSMISSION BLOCK HAVING THE SMALLEST
      DIFFERENCE BETWEEN TRANSMISSION COMPLETION TIME LIMIT   S510
             AND CURRENT TIME

         ASSIGN RADIO RESOURCE TO THE      S511
             TRANSMISSION BLOCK

Yes      RADIO RESOURCE REMAINED?             S512

                   No
      NOTIFY TRANSMISSION BLOCK MULTIPLEXING UNIT    S513
             OF ASSIGNMENT RESULT

                    END
```

EP 1 482 710 A1

Fig. 6

| nTH TRANSMISSION BLOCK STORING UNIT | TRANSMISSION COMPLETION TIME LIMIT (SECONDS)/ SEQUENCE NUMBER |
|---|---|
| 0 | 4.034/11,  4.056/12,  4.076/13·················· |
| 1 | 0.043/15,  0.053/16,  0.064/17················· |
| · · · | · · · |
| · · · | 3.036/3,  3.043/4,  3.051/5·················· |

# Fig. 7

AUTHORIZED DELAY TIME

TRANSMISSION COMPLETION TIME LIMIT
(THE SAME VALUE FOR RETRANSMISSION)

REQUEST ISSUING TIME

GRACE TIME
= PRIORITY INDICATOR

CURRENT TIME

RETRANSMISSION
REQUEST

TRANSMISSION TRIAL
(FIRST TIME)

t

# Fig. 8

```
                    ┌─────────┐
                    │  START  │
                    └────┬────┘
                         │
         ┌──────────────►○
         │               │
         │          ┌────┴────┐
         │          │   n=0   │
         │          └────┬────┘
         │               │
    ┌─────────┐          │
    │  n=n+1  ├─────────►○
    └─────────┘          │
         ▲               │
```

**S801** FOR nTH TRANSMISSION BLOCK AND AFTERWARDS

**S802** RETRANSMISSION BLOCK EXISTS TO WHICH RADIO RESOURCE HAS NOT BEEN ASSIGNED? — Yes →

No ↓

**S803** NEW TRANSMISSION BLOCK EXISTS TO WHICH RADIO RESOURCE HAS NOT BEEN ASSIGNED? — No

Yes ↓

**S804** SELECT THE OLDEST TRANSMISSION BLOCK AND OBTAIN REQUEST ISSUING TIME OF THE BLOCK

**S805** ADD AUTHORIZED DELAY TIME TO REQUEST ISSUING TIME TO OBTAIN FINAL TRANSMISSION COMPLETION TIME LIMIT AND STORE IT

**S806** ADD AUTHORIZED DELAY TIME MULTIPLIED BY K TO REQUEST ISSUING TIME TO SET AS TRANSMISSION COMPLETION TIME LIMIT

**S807** SELECT THE OLDEST RETRANSMISSION BLOCK AND OBTAIN REQUEST ISSUING TIME OF THE BLOCK

**S808** ADD DIFFERENCE BETWEEN REQUEST ISSUING TIME AND STORED FINAL TRANSMISSION COMLETION TIME LIMIT MULTIPLIED BY K TO REQUEST ISSUING TIME TO SET AS TRANSMISSION COMPLETION TIME LIMIT

No ←

**S809** ALL TRANSMISSION STORING UNITS CHECKED?

Yes ↓

**S810** SELECT TRANSMISSION BLOCK HAVING THE SMALLEST DIFFERENCE BETWEEN TRANSMISSION COMPLETION TIME LIMIT AND CURRENT TIME

**S811** ASSIGN RADIO RESOURCE TO THE TRANSMISSION BLOCK.

**S812** RADIO RESOURCE REMAINED? — Yes →

No ↓

**S813** NOTIFY TRANSMISSION BLOCK MULTIPLEXING UNIT OF ASSIGNMENT RESULT

```
                    ┌─────────┐
                    │   END   │
                    └─────────┘
```

# Fig. 9

AUTHORIZED DELAY TIME

TRANSMISSION BLOCK ARRIVAL

TRANSMISSION COMPLETION TIME LIMIT

COEFFICIENT=1/2

FINAL TRANSMISSION COMPLETION TIME LIMIT

t

GRACE TIME = PRIORITY INDICATOR

CURRENT TIME

RETRANSMISSION REQUEST

TRANSMISSION TRIAL FAILURE

EP 1 482 710 A1

AUTHORIZED DELAY TIME

TRANSMISSION BLOCK ARRIVAL

t

TRANSMISSION
COMPLETION
TIME LIMIT

AUTHORIZED DELAY TIME

TRANSMISSION BLOCK ARRIVAL

t

DIFFERENCE OCCURS
UNTIL TRANSMISSION
COMPLETION

TRANSMISSION
COMPLETION
TIME LIMIT

Fig. 10

# Fig. 11

TRANSMISSION BLOCK ARRIVAL

AUTHORIZED DELAY TIME

TRANSMISSION COMPLETION TIME LIMIT

USER A

t

TRANSMISSION BLOCK ARRIVAL

AUTHORIZED DELAY TIME

TRANSMISSION COMPLETION TIME LIMIT

USER B

t

# Fig. 12

START

QUALITY OF RADIO LINE IMPROVED? — Yes → INCREASE COEFFICIENT K BY 1 STEP

No

QUALITY OF RADIO LINE DEGRADED? — Yes → DECREASE COEFFICIENT K BY 1 STEP

No → END

EP 1 482 710 A1

# Fig.13

START

○

n=0

n=n+1 → ○

**S1301** FOR nTH TRANSMISSION BLOCK AND AFTERWARDS

**S1302** RETRANSMISSION BLOCK EXISTS TO WHICH RADIO RESOURCE HAS NOT BEEN ASSIGNED? — Yes

No

**S1303** NEW TRANSMISSION BLOCK EXISTS TO WHICH RADIO RESOURCE HAS NOT BEEN ASSIGNED? — No

Yes

**S1304** SELECT THE OLDEST TRANSMISSION BLOCK AND OBTAIN REQUEST ISSUING TIME OF THE BLOCK

**S1307** SELECT THE OLDEST RETRANSMISSION BLOCK

**S1305** ADD AUTHORIZED DELAY TIME TO REQUEST ISSUING TIME TO OBTAIN FINAL TRANSMISSION COMPELTION TIME LIMIT

**S1308** SELECT TIME LIMIT CORRESPONDING TO NUMBER OF TRANSMISSION TRIALS OUT OF STORED "TRANSMISSION COMPLETION TIME LIMIT" FOR EACH TRANSMISSION TRIAL

**S1306** DETERMINE AND STORE "TRANSMISSION COMPLETION TIME LIMIT" BEFOREHAND FOR EACH TRANSMISSION TRIAL WITHIN TIME PERIOD UNTIL FINAL TRANSMISSION COMPLETION TIME LIMIT

○

**S1309** ALL TRANSMISSION STORING UNITS CHECKED? — No

Yes

**S1310** SELECT TRANSMISSION BLOCK HAVING THE SMALLEST DIFFERENCE BETWEEN TRANSMISSION COMPLETION TIME LIMIT AND CURRENT TIME

**S1311** ASSIGN RADIO RESOURCE TO THE TRANSMISSION BLOCK

**S1312** RADIO RESOURCE REMAINED? — Yes

No

**S1313** NOTIFY TRANSMISSION BLOCK MULTIPLEXING UNIT OF ASSIGNMENT RESULT

END

| nTH TRANSMISSION BLOCK STORING UNIT | TRANSMISION COMPLETION TIME LIMIT (SECONDS)/ NUMBER OF TRANSMISSION TRIALS |
|---|---|
| 0 | [SEQUENCE NUMBER 1]   0.034/2,  0.056/3,  0.076/4·················<br>[SEQUENCE NUMBER 5]   0.145/2,  0.163/3,  0.182/4·················<br><br>[SEQUENCE NUMBER 11]   · · · · · |
| 1 | · · · · |
| · · · · | · · · · |
| · · · · | · · · · |

Fig. 14

# Fig. 15

TRANSMISSION BLOCK ARRIVAL

AUTHORIZED DELAY TIME

*t*

FINAL TRANSMISSION COMPLETION TIME LIMIT

USER A

EQUALLY DIVIDE AUTHORIZED DELAY TIME BY EXPECTED NUMBER OF TRANSMISSION TRIALS

# Fig. 16

TRANSMISSION BLOCK ARRIVAL

USER A

AUTHORIZED DELAY TIME

FINAL
TRANSMISSION
COMPLETION
TIME LIMIT

$t$

DIVIDE AUTHORIZED DELAY TIME BY EXPECTED NUMBER OF TRANSMISSION
TRIALS SO THAT INTERVALS BECOME GRADUALLY SHORT

# Fig.17

```
                        ┌─────────┐
                        │  START  │
                        └────┬────┘
                             │
    ┌──────────────────────►○
    │                        │
    │                   ┌────┴────┐
    │                   │   n=0   │
    │                   └────┬────┘
    │                        │
    │   ┌─────────┐          │
    │   │  n=n+1  ├─────────►○
    │   └─────────┘          │
    │                        ▼
    │         ┌──────────────────────────────┐
    │         │  FOR nTH TRANSMISSION BLOCK   │      ～ S1701
    │         │      AND AFTERWARDS           │
    │         └──────────────┬───────────────┘
    │                        ▼
    │              RETRANSMISSION BLOCK                  ～ S1702
    │         EXISTS TO WHICH RADIO RESOURCE HAS
    │              NOT BEEN ASSIGNED?              Yes ──┐
    │                        │ No                        │
    │                NEW TRANSMISSION              ～ S1703
    │         BLOCK EXISTS TO WHICH RADIO RESOURCE HAS        S1707
    │  No          NOT BEEN ASSIGNED?                          │
    │                        │ Yes                             │
    │         ┌──────────────────────────┐    ┌──────────────────────┐
    │         │ SELECT THE OLDEST         │    │  SELECT THE OLDEST   │
    │         │ TRANSMISSION BLOCK AND    │    │ RETRANSMISSION BLOCK │
    │  S1704  │ OBTAIN REQUEST ISSUING    │    └──────────┬───────────┘
    │         │ TIME OF THE BLOCK         │               │ ～ S1708
    │         └───────────┬──────────────┘    ┌───────────────────────┐
    │                     │                   │ OBTAIN TRANSMISSION    │
    │  S1705  ┌───────────────────────────┐   │ COMPLETION TIME LIMIT  │
    │         │ OBTAIN TRANSMISSION        │   │ BY USING FORMULA FROM  │
    │         │ COMPLETION TIME LIMIT BY   │   │ ARRIVAL TIME AND       │
    │         │ USING FORMULA FROM ARRIVAL │   │ AUTHORIZED DELAY TIME  │
    │         │ TIME AND AUTHORIZED DELAY  │   │ OF TRANSMISSION BLOCK  │
    │         │ TIME OF TRANSMISSION BLOCK │   │ AND NUMBER OF          │
    │         └───────────┬───────────────┘   │ TRANSMISSION TRIALS    │
    │                     │                   └───────────┬───────────┘
    │                     ▼                               │
    │                     ○◄──────────────────────────────┘
    │                     │
    │  No         ALL TRANSMISSION                 ～ S1709
    ├────────   STORING UNITS CHECKED?
    │                     │ Yes
    │         ┌───────────────────────────────────┐
    │         │ SELECT TRANSMISSION BLOCK HAVING   │    ～ S1710
    │         │ THE SMALLEST DIFFERENCE BETWEEN    │
    │         │ TRANSMISSION COMPLETION TIME LIMIT │
    │         │ AND CURRENT TIME                   │
    │         └───────────────┬───────────────────┘
    │         ┌───────────────────────────┐
    │         │ ASSIGN RADIO RESOURCE TO   │   ～ S1711
    │         │ THE TRANSMISSION BLOCK     │
    │         └───────────────┬───────────┘
    │  Yes                    │
    └────────  RADIO RESOURCE REMAINED?            ～ S1712
                             │ No
              ┌──────────────────────────────────────┐
              │ NOTIFY TRANSMISSION BLOCK MULTIPLEXING│ ～ S1713
              │ UNIT OF ASSIGNMENT RESULT             │
              └───────────────┬──────────────────────┘
                        ┌─────┴─────┐
                        │    END    │
                        └───────────┘
```

# Fig. 18

Fig. 19

# Fig. 20

PACKET SEPARATING UNIT

2004

PACKET STORING UNIT

2005

PACKET STORING UNIT

PACKET STORING UNIT

PACKET STORING UNIT

SCHEDULING UNIT

2006

PACKET MULTIPLEXING UNIT

2007

EP 1 482 710 A1

Fig. 21

# Fig. 22

TRANSMISSION BLOCK RECEIVING UNIT — 101

REQUEST ISSUING TIME ASSIGNING UNIT — 102

SEQUENCE NUMBER ASSIGNING UNIT — 403

TRANSMISSION BLOCK SEPARATING UNIT — 104

405

RADIO LINE QUALITY RECEIVING UNIT

AUTHORIZED DELAY TIME FOR EACH USER

CURRENT TIME — 2201

SCHEDULING UNIT — 109

TRANSMISSION BLOCK STORING UNIT

TRANSMISSION BLOCK STORING UNIT

TRANSMISSION BLOCK STORING UNIT

TRANSMISSION BLOCK STORING UNIT

TRANSMISSION BLOCK MULTIPLEXING UNIT — 106 — 107

RADIO TRANSMISSION UNIT

RETRANSMISSION CONTROLLING UNIT — 408

39

# Fig.23

```
                        ┌─────────┐
                        │  START  │
                        └────┬────┘
                             │
                    ┌────────○◄──────────────────┐
                    │                            │
                 ┌──┴──┐                         │
                 │ n=0 │                         │
                 └──┬──┘                         │
                    │                            │
      ┌───────┐     │                            │
  ┌──►│ n=n+1 │────►○                            │
  │   └───────┘     │                            │
  │                 ▼                            │
```

```
      FOR nTH TRANSMISSION BLOCK AND AFTERWARDS          ~ S501
```

```
              RETRANSMISSION BLOCK                  ~ S502
        EXISTS TO WHICH RADIO RESOURCE HAS
              NOT BEEN ASSIGNED?                      Yes
```

No

```
                NEW TRANSMISSION                 ~ S503
        BLOCK EXISTS TO WHICH RADIO RESOURCE HAS
                NOT BEEN ASSIGNED?
```
No                                                      Yes

| | |
|---|---|
| **S504** SELECT THE OLDEST TRANSMISSION BLOCK AND OBTAIN REQUEST ISSUING TIME OF THE BLOCK | SELECT THE OLDEST RETRANSMISSION BLOCK ~ **S507** |
| **S505** ADD AUTHORIZED DELAY TIME TO REQUEST ISSUING TIME TO OBTAIN TRANSMISSION COMPLETION TIME LIMIT | SET STORED TRANSMISSION COMPLETION TIME LIMIT AS TRANSMISSION COMPLETION TIME LIMIT OF RETRANSMISSION BLOCK |

S508

```
No            ALL TRANSMISSION STORING              ~ S509
                   UNITS CHECKED?
```
Yes

```
      SELECT TRANSMISSION BLOCK HAVING THE SMALLEST     ~ S510
      DIFFERENCE BETWEEN TRANSMISSION COMPLETION TIME
                  LIMIT AND CURRENT TIME
```

```
              "DIFFERENCE" < THRESHOLD            S2301
                     VALUE?                        No
```
Yes

```
          ASSIGN RADIO RESOURCE TO THE            ~ S511
                TRANSMISSION BLOCK
```

```
Yes           RADIO RESOURCE REMAINED?            ~ S512
```
No

```
      NOTIFY TRANSMISSION BLOCK MULTIPLEXING UNIT OF    ~ S513
                  ASSIGNMENT RESULT
```

( 1 )

```
                        ┌─────────┐
                        │   END   │
                        └─────────┘
```

# Fig. 24

S2401 — CALCULATE RATIO OF "INSTANT LINE QUALITY" AND "AVERAGE LINE QUALITY" FOR EACH MOBILE STATION. CARRY OUT THE FOLLOWING PROCESSING FOR TRANSMISSION BLOCK STORING UNIT BELONGING TO MOBILE STATION HAVING LARGE "RATIO".

S2402 — ASSIGN RADIO RESOURCE

S2403 — RADIO RESOURCE REMAINED?

Yes — S2404 — SELECT TRANSMISSION BLOCK STORING UNIT BELONGING TO MOBILE STATION HAVING NEXT LARGEST "RATIO"

No — S2405 — NOTIFY PACKET MULTIPLEXING UNIT OF ASSIGNMENT RESULT

END

41

Fig. 25

| INTERNATIONAL SEARCH REPORT | ₃ | International application No. |
|---|---|---|
| | | PCT/JP03/02117 |

**A. CLASSIFICATION OF SUBJECT MATTER**

    Int.Cl⁷ H04L29/08

According to International Patent Classification (IPC) or to both national classification and IPC

**B. FIELDS SEARCHED**

Minimum documentation searched (classification system followed by classification symbols)

    Int.Cl⁷ H04L29/08, H04L12/56

Documentation searched other than minimum documentation to the extent that such documents are included in the fields searched

    Jitsuyo Shinan Koho(Y1, Y2)   1922-1996   Toroku Jitsuyo Shinan Koho(U)   1994-2003
    Kokai Jitsuyo Shinan Koho(U) 1971-2003   Jitsuyo Shinan Toroku Koho(Y2) 1996-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-332787 A (Hitachi, Ltd.), 30 November, 2000 (30.11.00), Page 5, column 8, line 20 to page 8, column 14, line 44 & EP 1054544 A2 | 1-3,15-17 |
| X | JP 2001-007808 A (Hitachi, Ltd.), 12 January, 2001 (12.01.01), Page 4, column 5, line 7 to column 6, line 46 (Family: none) | 1-3,15-17 |
| X | JP 9-307566 A (Hitachi, Ltd.), 28 November, 1997 (28.11.97), Page 3, column 4, line 31 to page 5, column 7, line 21 (Family: none) | 1-3,15-17 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 May, 2003 (15.05.03) | 27 May, 2003 (27.05.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP03/02117

| C (Continuation).   DOCUMENTS CONSIDERED TO BE RELEVANT | | |
|---|---|---|
| Category* | Citation of document, with indication, where appropriate, of the relevant passages | Relevant to claim No. |
| A | JP 2001-160831 A (Lucent Technologies Inc.), 12 June, 2001 (12.06.01), Full text & EP 1093260 A2       & AU 200061261 A & BR 200004508 A      & CA 2320693 A1 & KR 2001050689 A | 1-20 |
| A | JP 2000-349763 A (Hitachi, Ltd.), 15 December, 2000 (15.12.00), Full text (Family: none) | 1-20 |
| A | JP 11-055276 A (Oki Electric Industry Co., Ltd.), 26 February, 1999 (26.02.99), Full text (Family: none) | 1-20 |

Form PCT/ISA/210 (continuation of second sheet) (July 1998)